(19) Europäisches Patentamt / European Patent Office / Office européen des brevets

(11) **EP 3 130 398 B1**

(12) **EUROPEAN PATENT SPECIFICATION**

(45) Date of publication and mention
of the grant of the patent:
**24.07.2019 Bulletin 2019/30**

(51) Int Cl.:
**B01J 20/26** (2006.01)  **B01D 61/00** (2006.01)
**C02F 1/44** (2006.01)  **C08G 65/28** (2006.01)
**C08G 65/26** (2006.01)

(21) Application number: **15776803.7**

(22) Date of filing: **10.04.2015**

(86) International application number:
**PCT/JP2015/061289**

(87) International publication number:
**WO 2015/156404 (15.10.2015 Gazette 2015/41)**

(54) **TEMPERATURE-SENSITIVE ABSORBENT, WATER TREATMENT METHOD, AND WATER TREATMENT APPARATUS**

TEMPERATUREMPFINDLICHES ABSORPTIONSMITTEL, WASSERBEHANDLUNGSVERFAHREN UND WASSERBEHANDLUNGSVORRICHTUNG

ABSORBANT SENSIBLE À LA TEMPÉRATURE, PROCÉDÉ DE TRAITEMENT DE L'EAU, ET APPAREIL DE TRAITEMENT DE L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2014 US 201461978519 P**

(43) Date of publication of application:
**15.02.2017 Bulletin 2017/07**

(73) Proprietor: **JFE Engineering Corporation**
**Tokyo 100-0005 (JP)**

(72) Inventors:
• **FUCHIGAMI, Koji**
**Tokyo 100-0005 (JP)**
• **TSUJI, Takeshi**
**Tokyo 100-0005 (JP)**
• **TOMURA, Keiji**
**Tokyo 100-0005 (JP)**
• **FUJIWARA, Shigeki**
**Tokyo 100-0005 (JP)**
• **KUNUGI, Makoto**
**Tokyo 100-0005 (JP)**
• **OSATO, Aya**
**Tokyo 100-0005 (JP)**
• **IYER, Subramanian**
**Orange, California 92865 (US)**

(74) Representative: **Hoffmann Eitle**
**Patent- und Rechtsanwälte PartmbB**
**Arabellastraße 30**
**81925 München (DE)**

(56) References cited:
**EP-A1- 2 609 134**   **EP-A1- 2 617 480**
**WO-A1-2012/148864**   **WO-A1-2012/148864**
**DE-A1- 19 648 504**   **JP-A- 2006 206 807**
**JP-A- 2007 231 265**   **JP-A- 2012 111 705**
**JP-A- 2012 170 954**   **JP-A- 2012 207 001**
**US-A- 5 720 800**   **US-A1- 2010 155 329**

• **KNISCHKA RALF ET AL: "Functional poly(ethylene exide) multiarm star polymers: core-first synthesis using hyperbranched polyglycerol initiators", MACROMOLECULES, AMERICAN CHEMICAL SOCIETY, US, vol. 33, no. 2, 1 January 2000 (2000-01-01), pages 315-320, XP002966520, ISSN: 0024-9297, DOI: 10.1021/MA991192P**
• **KAZUAKI WAKITA: 'Highly concentrated microemulsions induced by amphiphilic poly(alkylene glycol)derivative and their applications' FRAGRANCE JOURNAL April 2011, pages 91 - 93, XP008184738**

## Description

Field

The present invention relates to a thermo-sensitive water absorbent used in a method and an apparatus for water desalination treatment for producing fresh water from water to be treated such as seawater and brackish water.

Background

Conventionally, various methods that produce fresh water from seawater using semipermeable membranes have been known, in which a reverse osmosis process has been mainly developed that applies a pressure of an osmotic pressure or higher to seawater and forces water to permeate therethrough. However, this process requires pressurization at high pressure and has a problem in that equipment costs and operation costs are required.

Given these circumstances, a method has been developed in recent years that contacts seawater with a salt solution with a higher concentration than the seawater through a semipermeable membrane, transfers water in the seawater to the salt solution by osmotic pressure without pressurization, and performs separation and recovery to produce fresh water (Patent Literatures 1 to 5, for example). Among these, the techniques disclosed in Patent Literatures 2 to 5 produce fresh water by a forward osmosis process using a thermo-sensitive water absorbent, as a draw material, that has a cloud point and coagulates when heated.

Citation List

Patent Literature

   Patent Literature 1: Japanese Laid-open Patent Publication No. 2011-83663
   Patent Literature 2: United States Patent Application Publication No. 2010/0155329 A1
   Patent Literature 3: Japanese Laid-open Patent Publication No. 2015-054292
   Patent Literature 4: Japanese Laid-open Patent Publication No. 2015-054293
   Patent Literature 5: WO 2012/148864

Summary

Technical Problem

In the production of fresh water by the forward osmosis process using the thermo-sensitive water absorbent as the draw material (Patent Literatures 2 to 5, for example), in order to produce fresh water from water to be treated such as seawater and brackish water more efficiently, an optimum thermo-sensitive water absorbent is required to be employed, and the conventional technologies have room for improvement in this regard.

Patent Literature 5 discloses a random copolymer or a sequential copolymer of low molecular weight diols including ethane diol and propane diol as the thermo-sensitive water absorbent, for example. However, the osmotic pressure of a thermo-sensitive water absorbent solution disclosed in an embodiment of Patent Literature 5 is 95 atm at most, which is insufficient. Furthermore, no disclosure is provided about basic structures of the copolymers and the content of the low molecular weight diols, and a specific structure of the thermo-sensitive water absorbent favorable for the production of fresh water is unclear.

An object of the present invention is to provide a thermo-sensitive water absorbent, a method of water treatment, and a water treatment apparatus that are more favorable than ever before in the production of fresh water by the forward osmosis process using a thermo-sensitive water absorbent, as a draw material, that has a cloud point and coagulates when heated.

Solution to Problem

   (1) The present invention provides the use of a thermo-sensitive water absorbent as a draw material in production of fresh water by a forward osmosis process, wherein the thermo-sensitive water absorbent has a cloud point, and coagulates when heated. The thermo-sensitive water absorbent is a block copolymer containing at least a hydrophobic part and a hydrophilic part, has a glycerin structure as a basic structure, and includes an ethylene oxide group and a group consisting of propylene oxide and/or butylene oxide.

(2) Moreover, in the use of (1), it is preferable that the hydrophobic part of the block copolymer is the butylene oxide.

(3) Moreover, in the use of (1) or (2), it is preferable that a hydrophobic group is added to an end of the block copolymer.

(4) Moreover, in the use of (3), it is preferable that the hydrophobic group of the block copolymer is an ethyl group.

(5) Moreover, in the use of any one of (1) to (4), number of the ethylene oxide in the block copolymer is in a range of 10 to 30, and number of the butylene oxide and number of the propylene oxide are in a range of:

$$0.8 \leq (BO + PO/3.5 + 10)/EO \leq 1.1$$

(where EO represents the number of the ethylene oxide, BO represents the number of the butylene oxide, and PO represents the number of the propylene oxide).

(6) Moreover, the present invention provides the use of a thermo-sensitive water absorbent as a draw material in production of fresh water by a forward osmosis process, the thermo-sensitive water absorbent being a block copolymer having a trimethylolpropane structure as a basic structure and including ethylene oxide and butylene oxide.

(7) Moreover, in the use of (6), number of the ethylene oxide in the block copolymer is in a range of 10 to 30, and number of the butylene oxide and number of the propylene oxide are in a range of:

$$0.8 \leq (BO + PO/3.5 + 13)/EO \leq 1.1$$

(where EO represents the number of the ethylene oxide, BO represents the number of the butylene oxide, and PO represents the number of the propylene oxide).

(8) Moreover, the present invention provides a method of water treatment using a thermo-sensitive water absorbent as the draw material in the production of fresh water by the forward osmosis process includes: contacting water to be treated with a water absorbing solution as an aqueous solution of the thermo-sensitive water absorbent through a semipermeable membrane, transferring water in the water to be treated to the water absorbing solution through the semipermeable membrane, and obtaining a diluted water absorbing solution diluted with the water and membrane concentrated water; heating the diluted water absorbing solution up to a temperature of the cloud point of the water absorbing solution or higher; phase separating the diluted water absorbing solution containing the thermo-sensitive water absorbent coagulated at the heating into a concentrated solution containing a coagulated solution of the thermo-sensitive water absorbent and a diluted solution with the water as a main component; and cooling the concentrated solution separated at the phase separating to a temperature of the cloud point of the water absorbing solution or lower, circulating the concentrated solution to the contacting, and reusing the concentrated solution as the water absorbing solution, wherein the thermo-sensitive water absorbent has a cloud point, and coagulates when heated, the thermo-sensitive water absorbent being a block copolymer containing at least a hydrophobic part and a hydrophilic part, having a glycerin structure as a basic structure, and including an ethylene oxide group and a group consisting of propylene oxide and/or butylene oxide.

(9) Moreover, the present invention provides a water treatment apparatus using a thermo-sensitive water absorbent. The water treatment apparatus includes: a forward osmosis unit that contacts water to be treated with a water absorbing solution as an aqueous solution of the thermo-sensitive water absorbent through a semipermeable membrane, transfers water in the water to be treated to the water absorbing solution through the semipermeable membrane, and obtains a diluted water absorbing solution diluted with the water and membrane concentrated water; a heating unit that heats the diluted water absorbing solution up to a temperature of the cloud point of the water absorbing solution or higher; a separating unit that phase separates the diluted water absorbing solution containing the thermo-sensitive water absorbent coagulated by the heating unit into a concentrated solution containing a coagulated solution of the thermo-sensitive water absorbent and a diluted solution with the water as a main component; and a cooling unit that cools the concentrated solution separated by the separating unit to a temperature of the cloud point of the water absorbing solution or lower, circulates the concentrated solution to the forward osmosis unit, and reuses the concentrated solution as the water absorbing solution, wherein the thermo-sensitive water absorbent has a cloud point, and coagulates when heated, the thermo-sensitive water absorbent being a block copolymer containing at least a hydrophobic part and a hydrophilic part, having a glycerin structure as a basic structure, and including an ethylene oxide group and a group consisting of propylene oxide and/or butylene oxide.

Moreover, the present invention provides a thermo-sensitive water absorbent for a draw material in production of fresh water by a forward osmosis process, the thermo-sensitive water absorbent being a block copolymer having a trimethylolpropane structure as a basic structure, and including ethylene oxide and butylene oxide, wherein number of the ethylene oxide in the block copolymer is in a range of 10 to 30, and number of the butylene oxide and number of the propylene oxide are in a range of:

$$0.8 \leq (BO + PO/3.5 + 13)/EO \leq 1.1$$

(where EO represents the number of the ethylene oxide, BO represents the number of the butylene oxide, and PO represents the number of the propylene oxide).

Advantageous Effects of Invention

The present invention can provide a thermo-sensitive water absorbent, a method of water treatment, and a water treatment apparatus that are more favorable than ever before in the production of fresh water by the forward osmosis process using a thermo-sensitive water absorbent, as a draw material, that has a cloud point and coagulates when heated.

Brief Description of Drawings

FIG. 1 is a table of a relationship between a salt concentration of water to be treated and a concentrated water osmotic pressure for each recovery ratio.
FIG. 2 is a table of structures and characteristic data of conventional thermo-sensitive water absorbents.
FIG. 3 is a block diagram schematically illustrating an embodiment of the present invention.
FIG. 4A is a table of structures and characteristic data of thermo-sensitive water absorbents according to an embodiment.
FIG. 4B is a table of a continuation of the table of the structures and characteristic data of the thermo-sensitive water absorbents according to the embodiment in FIG. 4A.
FIG. 5 is a diagram of a reaction of a polyglycol monoether with epoxypropane.
FIG. 6 is a diagram of reactions of the polyglycol monoether with epoxides.
FIG. 7 is a diagram of a reaction of a sodium-catalyzed polyglycol with epoxybutane.
FIG. 8 is a table of the names and molecular weights of precursors and prototypes.
FIG. 9 is a table of the names and molecular formulae of the precursors and prototypes.
FIG. 10 is a diagram of a synthesis scheme of GE1000-BBB (A5).
FIG. 11 is a diagram of a synthesis scheme of TP1000-BB (B1).
FIG. 12 is a graph of osmotic pressure estimated from chemical potential of magnesium chloride.
FIG. 13 is a graph of a relationship between $MgCl_2$ concentration and TDS concentration.
FIG. 14 is a table of the cloud points of the prototypes.
FIG. 15 is a graph of the cloud point of a GE1000-BBP (A2) solution.
FIG. 16 is a graph of the cloud point of a GE1000-BBB (A5) solution.
FIG. 17 is a graph of the cloud point of a GE1000-BBPP (A3) solution.
FIG. 18 is a graph of the cloud point of the GE1000-BBB (A5) solution.
FIG. 19 is a graph of the osmotic pressure of GE1000-BBB (A5).
FIG. 20A is a table of characteristics of porotype chemical substances.
FIG. 20B is a table of a continuation of the table of the characteristics of the prototype chemical substances in FIG. 20A.
FIG. 21 is a graph of the absorbance of deionized water as a control in a membrane filtration experiment for an upper layer diluted solution obtained by subjecting a thermo-sensitive water absorbing liquid to heating and gravity separation.
FIG. 22 is a graph of the absorbance of permeate water obtained by membrane filtration of the upper layer diluted solution obtained by subjecting the thermo-sensitive water absorbing liquid to heating and gravity separation at 175 psi.
FIG. 23 is a graph of the absorbance of permeate water obtained by membrane filtration of the upper layer diluted solution obtained by subjecting the thermo-sensitive water absorbing liquid to heating and gravity separation at 250 psi.
FIG. 24 is a graph of the FT-IR absorbance of GE1000-BBB (A5) as a thermo-sensitive water absorbent.
FIG. 25 is a schematic diagram of an experimental apparatus for measuring an FO membrane permeate flux.

FIG. 26 is a diagram of a summary of the weight of permeate water relative to time.

Description of Embodiment

The following describes a water treatment apparatus, a method of water treatment, and a thermo-sensitive water absorbent for use in the water treatment apparatus and the method of water treatment according to an embodiment of the present invention in detail with reference to the accompanying drawings. This embodiment does not limit the present invention.

Embodiment

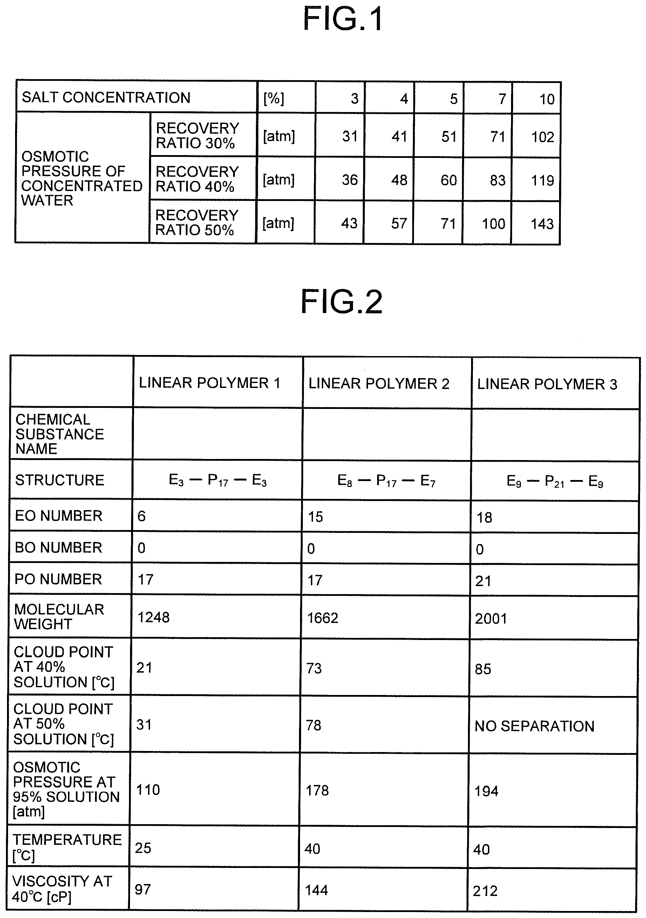

The following describes the present embodiment with reference to FIG. 1 to FIG. 4B.
The following first describes requirements for an optimum thermo-sensitive water absorbent in the production of fresh water by the forward osmosis process using a thermo-sensitive water absorbent, as a draw material, that has a cloud point and coagulates when heated with reference to FIG. 1 and FIG. 2. Examples of the requirements for this optimum thermo-sensitive water absorbent mainly include (1) high osmotic pressure, (2) low cloud point, (3) low viscosity, and (4) a steric structure with a large projected area. The following describes these requirements in order.

(1) High Osmotic Pressure

In the production of fresh water by the forward osmosis process, when fresh water is obtained by desalinating saline water using an FO membrane (a forward osmosis membrane), if the osmotic pressure of the thermo-sensitive water absorbent flowing into the FO membrane is not higher than the osmotic pressure of concentrated water, the thermo-sensitive water absorbent cannot absorb water. If the recovery ratio of the fresh water from the saline water is excessively low, intake power and treatment costs of pretreatment solid-liquid separation such as sand filtration, an MF membrane, and a UF membrane increase, and it is desirable that the recovery ratio of the fresh water from the saline water is high. Seawater desalination treatment by an RO membrane is generally used at about 30 to 50%.
FIG. 1 is a table of a relationship between a salt concentration of water to be treated and concentrated water osmotic pressure for each recovery ratio, for example. As listed in FIG. 1, for seawater with a salt concentration of 3 to 4%, the osmotic pressure is about 30 to 60 atm, but practically, the osmotic pressure is preferably 110 atm or higher for the following reason. This is because a larger difference between the concentrated water osmotic pressure and the osmotic pressure of the thermo-sensitive water absorbent gives a higher permeation rate of the forward osmosis membrane, and a membrane area required to obtain the fresh water is reduced, whereby membrane facility costs can be reduced. The osmotic pressure difference is preferably about 50 atm. For high salt concentration waste water with a salt concentration of 10% such as associated water of oil or gas wells, the osmotic pressure is about 100 to 140 atm, and also in this case similarly, the osmotic pressure of the thermo-sensitive water absorbent is preferably 190 atm or higher.
Consequently, the osmotic pressure of the thermo-sensitive water absorbent may be 30 atm or higher and preferably 110 atm or higher for seawater desalination and may be 100 atm or higher and preferably 190 atm or higher when the high salt concentration waste water such as the associated water is treated. Consequently, it is desirable that the osmotic pressure of the thermo-sensitive water absorbent for obtaining fresh water be as high as possible.

(2) Low Cloud Point

In the production of fresh water by the forward osmosis process, a water absorbing solution containing the thermo-sensitive water absorbent is heated up to a temperature higher than its cloud point to coagulate and separate the thermo-sensitive water absorbent. In this situation, a lower cloud point of the thermo-sensitive water absorbent is favorable, because the equipment costs of a heat exchanger can be reduced, and low-temperature waste heat is available. For this reason, it is desirable that the cloud point of the thermo-sensitive water absorbent is lower. The cloud point may be 70°C or lower, for example, preferably 50°C or lower, and more preferably 45°C or lower.
The cloud point of the thermo-sensitive water absorbent is required not to coagulate at the time of FO membrane filtration, and when seawater is not cooled, the cloud point of the thermo-sensitive water absorbent is required to be the highest temperature of the seawater or higher. Consequently, the cloud point of the thermo-sensitive water absorbent is preferably 30°C or higher when used in the temperate regions and 40°C or higher in the tropical regions.

(3) Low Viscosity

In the production of fresh water by the forward osmosis process, when the water absorbing solution containing the thermo-sensitive water absorbent has high viscosity, pressure losses in a membrane apparatus and piping increase, whereby electricity costs increase. In addition, a mass transfer rate on the surface of the FO membrane decreases, whereby the degree of concentration polarization increases, a high membrane filtration rate cannot be obtained, and membrane equipment costs increase. Given these circumstances, it is desirable that the water absorbing solution containing the thermo-sensitive water absorbent has low viscosity.

(4) Steric Structure with Large Projected Area

In an FO membrane desalination system, semipermeable membrane filtration such as an RO membrane and an NF membrane may be performed as final treatment after cloud point separation, and in membrane treatment, a steric structure with branches and a large projection area such as a glycerin structure and a trimethylolpropane structure is more preferable than a conventional linear steric structure, because polymers are difficult to permeate the membrane in a vertical direction, and a high removal rate can be obtained. Thus, it is desirable that the thermo-sensitive water absorbent be a steric structure with a large projected area.

Examples of the conventional thermo-sensitive water absorbent include an ester of ethylene oxide and a fatty acid as a representative substance that exhibits a cloud point. These substances are commercially available as various products of surfactants. When an aqueous solution containing such a substance in a concentration of around 50% is heated, it becomes cloudy at the cloud point or higher, but it does not separate into water and a high salt concentration solution even after it is left for a long time. Consequently, it is not suitable for being used as the thermo-sensitive water absorbent in the FO membrane desalination system. Its osmotic pressure is around 50 atm, by which an applicable salt concentration of waste water is limited.

Conventional examples of the thermo-sensitive water absorbent as a substance that separates when heated up to its cloud point or higher include linear polymers of ethylene oxide (EO) and propylene oxide (PO) (refer to FIG. 2). These substances become cloudy when heated and then separate into an aqueous layer and a polymer layer by the coagulation of cloudy fine particles when they are left to stand for several minutes with the temperature maintained.

FIG. 2 is a table of structures and characteristic data of conventional thermo-sensitive water absorbents. Linear Polymer 2 listed in FIG. 2 has a cloud point at a 40% solution of 73°C and an osmotic pressure at a 95% solution of 178 atm, for example. This substance has a high osmotic pressure and also has a high cloud point, which is 73°C. In this case, if the EO number is reduced, although a separation temperature decreases, the osmotic pressure also decreases as in Linear Polymer 1 listed in FIG. 2. If the EO number is increased, although the osmotic pressure increases, the cloud point exceedingly increases, and no separation is achieved depending on the concentration as in Linear Polymer 3 listed in FIG. 2. In other words, the linear polymers of ethylene oxide and propylene oxide as the conventional thermo-sensitive water absorbents cannot achieve both high osmotic pressure and low cloud point.

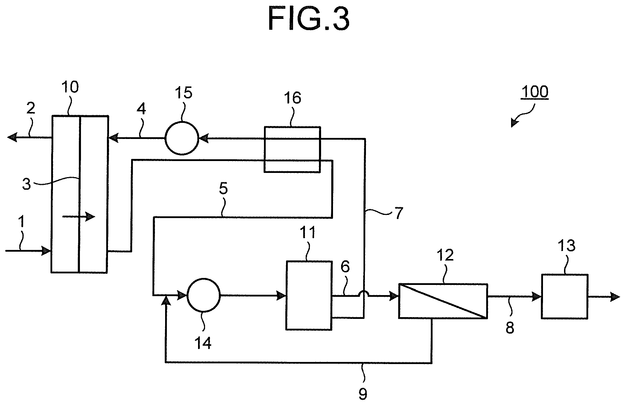

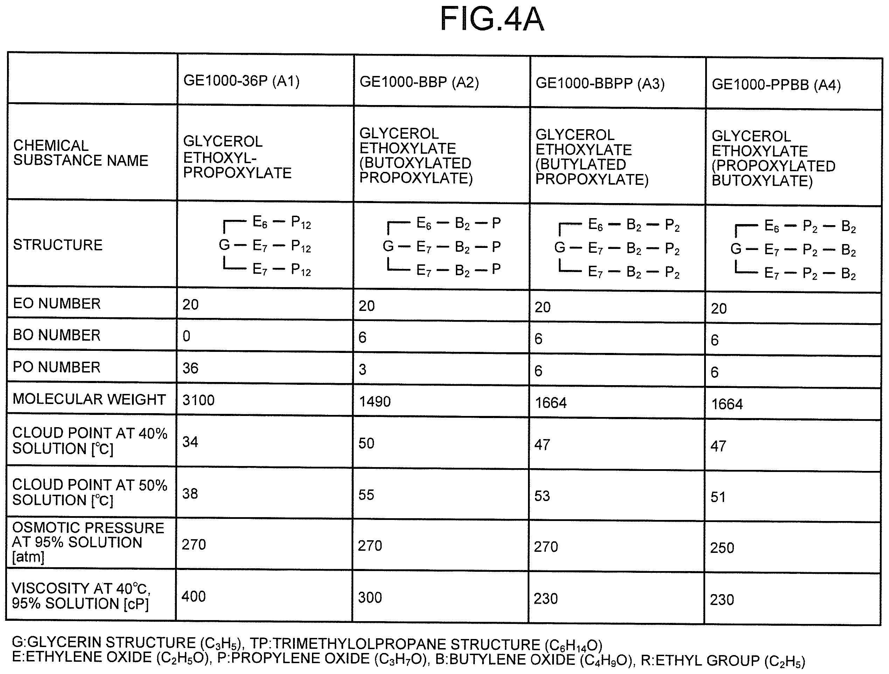

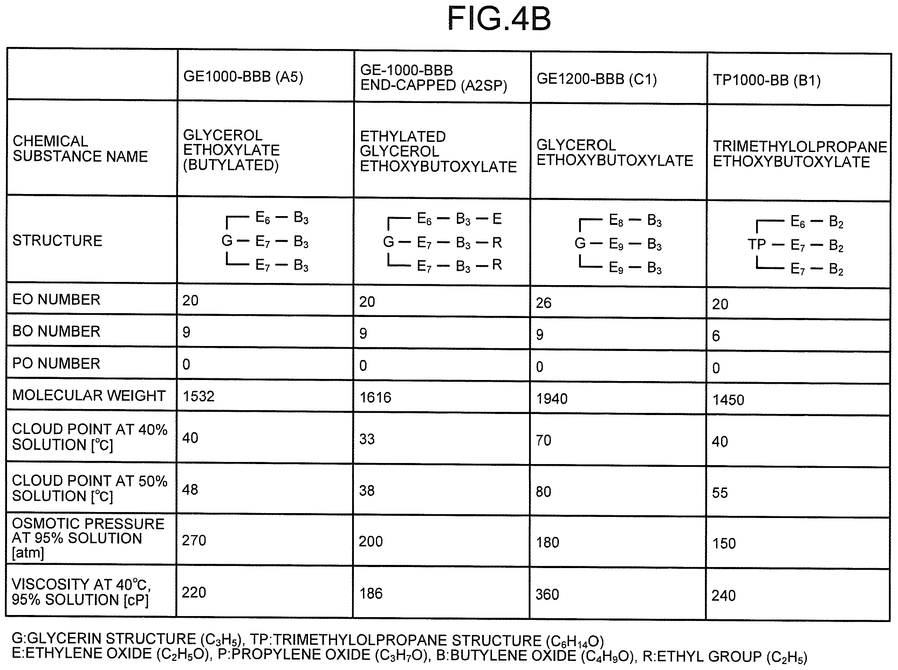

The following describes details of the production of fresh water by the forward osmosis process using the thermo-sensitive water absorbent according to the present embodiment that satisfies the requirements of (1) high osmotic pressure, (2) low cloud point, (3) low viscosity, and (4) a steric structure with a large projected area as the draw material with reference to FIG. 3, FIG. 4A, and FIG. 4B.

With reference to FIG. 3, details of this water treatment apparatus 100 according to the present embodiment will be described. FIG. 3 is a block diagram schematically illustrating an embodiment of the present invention.

As illustrated in FIG. 3, the water treatment apparatus 100 according to the present embodiment schematically at least includes a forward osmosis membrane apparatus 10 including a semipermeable membrane 3, a gravity separation tank 11, a membrane filtration apparatus 12, a posttreatment apparatus 13, a heater 14, a cooler 15, and a heat exchanger 16.

In the water treatment apparatus 100 illustrated in FIG. 3, water 1 to be treated such as seawater is put into the forward osmosis membrane apparatus 10, water permeates through the semipermeable membrane 3 into an opposite chamber, and residual membrane concentrated water 2 is drained. A water absorbing solution 4 flows into the opposite chamber of the forward osmosis membrane apparatus 10, contacts the water 1 to be treated through the semipermeable membrane 3, is transferred from the water to be treated 1, is diluted with the water, and leaves the forward osmosis membrane apparatus 10. A diluted water absorbing solution 5 that has left the forward osmosis membrane apparatus 10 passes through the heat exchanger 16 to be heated through heat exchange with a gravity-separated concentrated solution 7, is further heated by the heater 14, and enters the gravity separation tank 11.

A diluted solution 6 separated by the gravity separation tank 11 is filtered by the membrane filtration apparatus 12, and obtained membrane filtered water 8 is further purified by the posttreatment apparatus 13 such as activated carbon to obtain treated water. This posttreatment apparatus 13 is unnecessary when the concentration of the thermo-sensitive water absorbent contained in the membrane filtered water 8 is low enough to sufficiently match the purpose of use. Membrane concentrated water 9 that has not been filtered by the membrane filtration apparatus 12 is returned to the stage preceding the heater 14 and is phase separated together with the diluted water absorbing solution 5.

The concentrated solution 7 separated by the gravity separation tank 11 passes through the heat exchanger 16, is cooled by the cooler 15, and is returned to the forward osmosis membrane apparatus 10 as the water absorbing solution 4.

The water 1 to be treated that is treated by the water treatment apparatus 100 according to the present embodiment is a solution with water as a solvent, and examples thereof include seawater, brackish water, associated water from wells that mine shale gas, oil sand, coal bed methane (CBM), or oil. Examples of the water 1 to be treated also include sewage, various kinds of industrial waste water, and waste water from oil fields, gas fields, or the like.

The associated water is water drained associated with objects to be mined from wells and contains salts, organic matter, and suspended solids. Examples of the concentration of pollutants contained include 1,000 to 100,000 mg/L for evaporation residues (mainly $Na^+$, $K^+$, $Ca^{2+}$, $Cl^-$, $SO_4^{2-}$, or the like), 10 to 1,000 mg/L as TOC for the organic matter (oil content, added chemicals, or the like), and 100 to 10,000 mg/L for the suspended solids.

Separation methods for the oil content and the associated water are not limited, and oil-water separation is performed by sedimentation, for example.

Referring again to FIG. 3, the following describes details of the method of water treatment according to the present embodiment performed using the water treatment apparatus 100. As described below, the method of water treatment according to the present embodiment schematically at least includes a filtration process, a forward osmosis process, a heating process, a separating process, a cooling-and-circulating process, and a membrane treatment process. The following describes the processes in order.

Filtration Process

Although not illustrated in FIG. 3, first, the water 1 to be treated is subjected to filtration treatment as needed. This filtration treatment is performed with a filter using a microfiltration membrane (an MF membrane), for example, and for the filtration membrane, a normal membrane used as the microfiltration membrane can be used. Examples thereof include cellulose acetate, polytetrafluoroethylene, polysulfone, polyvinyl chloride, ceramic membranes, and porous glass membranes. Microfiltration treatment produces membrane filtered water that has passed through the microfiltration membrane and membrane concentrated water that has not passed through the membrane and has remained.

Furthermore, in the filtration process, filtration treatment using an ultrafiltration membrane (a UF membrane) or filtration treatment such as sand filtration can be used, in addition to the filtration treatment using the microfiltration membrane. For the material of the ultrafiltration membrane, a material similar to that of the microfiltration membrane is used.

Forward Osmosis Process

The forward osmosis process is a process that contacts the filtrated water 1 to be treated with the water absorbing solution 4 having a high osmotic pressure, in which the thermo-sensitive water absorbent is dissolved in water, through the semipermeable membrane 3, transfers water in the water 1 to be treated to the water absorbing solution 4 through the semipermeable membrane 3, and obtains the diluted water absorbing solution 5 diluted with the water and the membrane concentrated water 2.

The thermo-sensitive water absorbent is a substance that is hydrophilic and is dissolved in water well at low temperatures but acquires hydrophobicity and decreases in solubility at a certain temperature or higher, in which a temperature at which water solubility changes into water insolubility is called a cloud point. When reaching this temperature, the thermo-sensitive water absorbent that has acquired hydrophobicity coagulates and becomes cloudy. This thermo-sensitive water absorbent is used as various kinds of surfactants, dispersants, emulsifiers, or the like and is used as a draw material in the production of fresh water by the forward osmosis process in the present embodiment.

The thermo-sensitive water absorbent used in the forward osmosis process satisfies the above-described requirements of (1) high osmotic pressure, (2) low cloud point, (3) low viscosity, and (4) a steric structure with a large projected area.

The following describes details of chemicals characteristic data of thermo-sensitive water absorbents according to the present embodiment with reference to FIG. 4A and FIG. 4B. FIG. 4A is a table of structures and characteristic data of the thermo-sensitive water absorbents according to the embodiment. FIG. 4B is a table of a continuation of the table of the structures and characteristic data of the thermo-sensitive water absorbents according to the embodiment in FIG. 4A.

FIG. 4A and FIG. 4B are results obtained by prototyping polymers with various kinds of steric structures and examining the characteristics of the respective polymers by the applicant. Specifically, the applicant introduced a hydrophilic part (that is, a part having hydrophilicity) for obtaining a desired osmotic pressure and a hydrophobic part (that is, a part having hydrophobicity) such as propylene oxide (PO) and butylene oxide (BO) for adjusting the cloud point to a glycerin structure forming a steric structure to synthesize the thermo-sensitive water absorbents and examined the characteristics thereof. As a result of the examination, the hydrophobic part introduced in a larger amount tended to decrease viscosity. Details are as follows.

As for GE1000-36P (A1) in FIG. 4A, the number of ethylene oxide (an EO number) was 20, whereby a sufficient osmotic pressure of 270 atm was obtained. The number of propylene oxide per molecule (a PO number) was used in as large amount as 36, whereby a low cloud point of 34°C was obtained. However, because the PO number was large, the molecular weight was as high as 3,100, and the viscosity was as extremely high as 400 cP.

As for GE1000-BBP (A2) in FIG. 4A, part of PO was replaced with BO while the EO number was maintained at 20, whereby lower molecular weight and lower viscosity were intended. When the number of butylene oxide (a BO number) was 6, and the PO number was 3, the cloud point was as rather high as 50°C, and the osmotic pressure was as high as 270 atm. The molecular weight was 1,490, which was reduced to about half that of GE1000-36P (A1), but the viscosity was as high as 300 cP.

As for GE1000-BBPP (A3) and GE1000-PPBB (A4) listed in FIG. 4A, PO of the hydrophobic part was increased to 6 relative to GE1000-BBP (A2). Although the osmotic pressure was slightly low for GE1000-PPBB (A4), which was BO-ended, values as high as 250 to 270 atm were obtained for both. The hydrophobic part was increased, whereby the cloud point was reduced to 47°C by 3°C relative to A2, and the viscosity was reduced to 230 cP by 70 cP relative to A2, which were more favorable characteristics.

As for GE1000-BBB (A5) listed in FIG. 4B, the hydrophobic parts were totally replaced with BO. The BO number was 9, whereby the cloud point was as low as 40°C. The viscosity was 220 cP, which was about half that of GE1000-36P (A1). The osmotic pressure was maintained to be as high as 270 atm.

Although not listed in FIG. 4A and FIG. 4B, a block copolymer having a glycerin structure and containing ethylene oxide, propylene oxide, and butylene oxide was prototyped in which the number of the ethylene oxide adjacent to the glycerin structure was 20, the number of the butylene oxide adjacent to the ethylene oxide was 6, and the number of the propylene oxide at ends adjacent to the butylene oxide was 24; its cloud point was 28°C, which was lower than the favorable range.

As for GE1000-BBB terminal-capped (A2SP) listed in FIG. 4B, an ethyl group as a hydrophobic group was introduced to an end of GE1000-BBB (A5). Owing to an increase in hydrophobicity, the cloud point was reduced to 33°C relative to 40°C of GE1000-BBB (A5), and the viscosity was also reduced to 186 cP by 34 cP. The osmotic pressure was rather reduced to 200 atm owing to the increase in the hydrophobicity.

As for TP1000-BB (B1) listed in FIG. 4B, the basic structure was a trimethylolpropane structure, and the hydrophobic part was BO. Although the EO number was 20, the carbon number of the basic structure was larger than that of the glycerin structure by 3 to increase hydrophobicity, and the osmotic pressure was as rather low as 150 atm. The BO number was 6, whereby the cloud point was as low as 40°C. The viscosity was as low as 240 cP, which was almost same as that of GE1000-BBB (A5).

From the results listed in FIG. 4A and FIG. 4B, the applicant has obtained the following findings about a relationship between the steric structure and the characteristics. First, as for the EO number and the osmotic pressure, the osmotic pressure is produced by EO as a part having hydrophilicity, and a larger EO number in one molecule gives a larger value. In order to obtain an osmotic pressure of about 100 to 300 atm, the EO number is preferably about 10 to 30. As for the BO number, the PO number, and the cloud point, the cloud point tends to be a low value as an addition mole number of BO or PO increases. When PO is added, it is smaller in the number of carbon than BO and is hence low in hydrophobicity, and in order to obtain the same cloud point decreasing effect as 1 unit of BO, 3.5 units of PO is required. Furthermore, a larger addition mole number of EO tends to give a higher cloud point. When these circumstances are expressed by a formula, a condition for containing the cloud point within the range of 30 to 70°C is:

$$0.8 \leq (BO + PO/3.5 + 10)/EO \leq 1.1.$$

In the formula, EO represents the number of the ethylene oxide; BO represents the number of the butylene oxide; and PO represents the number of the propylene oxide.

As described above, the thermo-sensitive water absorbent according to the present embodiment is the block copolymer (A1 to A5, A2SP, and C1 in FIG. 4A and FIG. 4B) containing at least the hydrophobic part and the hydrophilic part, having the glycerin structure as the basic structure, and including an ethylene oxide group and a group consisting of propylene oxide and/or butylene oxide. More specifically, in the thermo-sensitive water absorbent according to the present embodiment, the number of the ethylene oxide contained in the block copolymer is in the range of 10 to 30, and the number of the butylene oxide and the number of the propylene oxide are in the range of the formula "$0.8 \leq (BO + PO/3.5 + 10)/EO \leq 1.1$." The thermo-sensitive water absorbent according to the present embodiment is the block copolymer (B1 in FIG. 4B) containing the trimethylolpropane structure as the basic structure, ethylene oxide, and butylene oxide. In the thermo-sensitive water absorbent according to the present embodiment, the hydrophobic part of the block copolymer may be the butylene oxide. The hydrophobic group such as the ethyl group may be added to the end of the block copolymer (A2SP in FIG. 4B). More specifically, in the thermo-sensitive water absorbent according to the present embodiment, the number of the ethylene oxide contained in the block copolymer is in the range of 10 to 30, and in order to contain the cloud point within the range of 30 to 70°C, the number of the butylene oxide and the number of the propylene oxide are required to be in the range of the formula "$0.8 \leq (BO + PO/3.5 + 13)/EO \leq 1.1$."

The concentration of the water absorbing solution 4 is required to be adjusted so that the osmotic pressure of the water absorbing solution 4 will be sufficiently higher than the osmotic pressure of the water 1 to be treated.

The semipermeable membrane 3 used in the forward osmosis process may be a membrane that can cause water to permeate selectively therethrough and is preferably the forward osmosis (FO) membrane. The reverse osmosis (RO) membrane can also be used. Examples of the material of the semipermeable membrane 3 include, but not limited to, materials based on cellulose acetate, polyamide, polyethylene imine, polysulfone, and polybenzimidazole. The form of the semipermeable membrane 3 is also not limited to a particular form and may be any of a flat membrane, a tubular membrane, a hollow fiber, and the like.

An apparatus for installing this semipermeable membrane 3 places the semipermeable membrane 3 within a container with normally a cylindrical or box shape, can flow the water 1 to be treated through one chamber partitioned by this semipermeable membrane 3, and flow the water absorbing solution 4 to the other chamber. A known semipermeable membrane apparatus can be used. A commercially available apparatus can also be used.

When the water 1 to be treated is contacted with the water absorbing solution 4 through the semipermeable membrane 3 in the forward osmosis process, the water in the water 1 to be treated is transferred to the water absorbing solution 4 through the semipermeable membrane 3 due to an osmotic pressure difference. The membrane concentrated water 2 flows out of the chamber into which the water 1 to be treated has flown, and the diluted water absorbing solution 5 flows out of the chamber into which the water absorbing solution 4 has flown.

Heating Process

The diluted water absorbing solution 5 diluted by the water transferred from the water to be treated 1 in the forward osmosis process is heated up to the temperature of the cloud point or higher to coagulate at least part of the thermo-sensitive water absorbent. This coagulation is a phenomenon in which minute droplets produced by phase separation of the thermo-sensitive water absorbent and the water contained in the diluted water absorbing solution 5 become united. A heating temperature in the heating process can be controlled by adjusting the flow amount of a heating medium into which the heat exchanger 16 is introduced, for example. For a heat source of this heating process, sensible heat of the concentrated solution 7 separated in the next separating process is preferably used.

Separating Process

Phase separation is performed into a concentrated solution layer (a lower layer) with the thermo-sensitive water absorbent phase separated in the heating process as a main component and a diluted solution layer (an upper layer) containing a small amount of the thermo-sensitive water absorbent with water as a main component. This phase separation can be performed by being left to stand within the gravity separation tank 11 at a liquid temperature of the cloud point or higher. In this situation, when the diluted water absorbing solution heated up to the liquid temperature of the cloud point or higher is charged into the gravity separation tank 11, the minute droplets of the thermo-sensitive agent produced during the heating rapidly settle, and the droplets become united to form a concentrated solution layer below. The time required for this phase separation is about 2 to 30 minutes.

Other than that, the separating process can also be performed using a centrifugal separator such as a super decanter that performs separation into a heavy liquid and a light liquid, a liquid separator such as a coalescer that facilitates coagulation using a medium of a material such as resin.

Cooling-and-Circulating Process

The concentrated solution 7 separated in the separating process is cooled to a temperature lower than the cloud point of the water absorbing solution 4 and is thereby dissolved in water to be reproduced as the water absorbing solution 4. This temperature can be employed in a wide range and is preferably room temperature or a higher temperature considering economic efficiency. The water 1 to be treated or the diluted water absorbing solution 5 obtained in the forward osmosis process is preferably used as a cold heat source therefor in view of efficient use of energy. If this cooling is insufficient, when the concentration decreases by the water transferred from the water 1 to be treated in the forward osmosis process, the cloud point also decreases, and phase separation occurs depending on conditions, whereby the osmotic pressure is lost. The reproduced water absorbing solution 4 can be circulated as it is to be reused.

Membrane Treatment Process

The diluted solution 6 (an upper layer solution) separated in the separating process is membrane filtered by a nanofiltration membrane (an NF membrane) or a reverses osmosis membrane (an RO membrane) to remove the remaining thermo-sensitive water absorbent as needed. The membrane filtered water is fresh water and can be used as drinking water, industrial water, or the like. The membrane concentrated water 9 that has not been membrane filtered and has remained contains the thermo-sensitive water absorbent and is preferably circulated to the stage preceding the heating process. Alternatively, the membrane concentrated water 9 can also be concentrated and be directly returned to the forward osmosis process as the water absorbing solution 4. The membrane concentrated water 2 obtained in the forward osmosis process contains salt content in a high concentration and can also be concentrated to precipitate and separate the salt content, which can effectively be used.

As described above, the present embodiment can provide a thermo-sensitive water absorbent, a method of water treatment, and a water treatment apparatus that are more favorable than ever before in the production of fresh water by the forward osmosis process using a thermo-sensitive water absorbent, as a draw material, that has a cloud point and coagulates when.

Examples

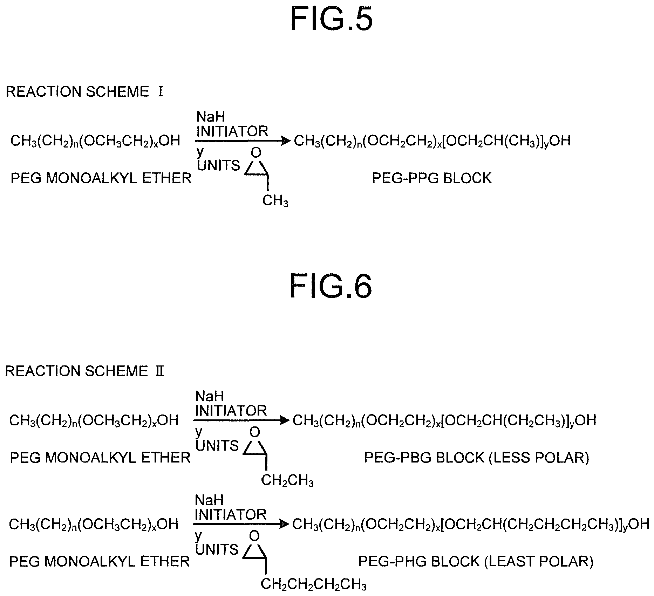

The following describes examples on evaluations of the thermo-sensitive water absorbent used as the draw material in the production of fresh water by the above-described forward osmosis process and the water absorbing solution at least containing the thermo-sensitive water absorbent with reference to FIG. 5 to FIG. 26.

[1. Introduction]

Background

Polyethylene glycol (PEG) and polypropylene glycol (PPG) oligomers and polymers, generally referred herein as polyglycols, are known to possess hydrophilic properties which are useful in their application as antifouling agents, surfactants and in biomedical applications as drug delivery agents. Their hydrophilic properties decrease with the change of monomer from the ethylene to propylene to butylene. Aqueous solutions of polyglycols in water display a miscibility gap characteristic in which the polymers coagulation then separate into polymer rich and water rich phases.

Materials

Raw materials like PEG 200, PEG 400 and PEG 600 were used, along with other precursor materials, for synthesis of the desired polyglycols that are monodisperse. Sodium metal was used as the deprotonator, and various glycol precursors were used in the synthesis. A literature review was performed to profile the osmotic pressures, viscosity, refractive indices, and cloud points of the precursors raw materials for synthesis.

Preferences

A cloud point of about 45°C and a particular specific gravity of more than 1 (more than water) were intended to be achieved for better separation tendencies after coagulation, while an osmotic pressure of 150 atm or more was maintained. Volumes of up to 250 mL block copolymer derivatives (that is, block copolymers as the thermo-sensitive water absorbent) were synthesized for use in preliminary testing.

Refer to FIG. 5. FIG. 5 is a diagram of a reaction of a polyglycol monoether with epoxypropane. In order to alter the clouding and phase change of a polyglycol solution, synthesized polyethylene glycol and synthesized polypropylene glycol were propylated and/or butylated as illustrated in FIG. 5. Both procedures can lower the cloud point of the polyglycols. Phase separation efficiency was to be qualified both by IR spectrophotometry and refractometry, while the viscosity measurements were performed on these synthesized polymeric draw solutions using an Ubbelohde viscometer.

Synthesis of new optimized draw solutions was performed, based on new chemical properties of polyethylene glycol-polypropylene glycol monobutyl ether copolymers, or other organic derivatives of similar compounds for the optimal draw solution for the forward osmosis process (i.e., water absorbing solution). The new optimized draw solutions had the following characteristics:

a. Reaching a cloud point or flocculating at about 45°C
b. Being dissolved in water at 5 to 40°C in a high concentration (about 70% to 90% by weight)
c. Developing an osmotic pressure exceeding 150 atm at 95% concentration

d. Being nontoxic

[2. Design of polymer structure]

The hydrophilicity (or HLB ratio, hydrophilic-lipophilic balance) of PEG-PPG block copolymers $CH_3(CH_2)_n(OCH_2CH_2)_x[OCH_2CH(CH_3)]_yOH$ has been shown to be influenced by the relative amounts of methylene units (n), oxoethylene units (x), and oxopropylene units (y). The greater the ratio of oxoethylene units (x), the greater the hydrophilic nature, and the greater the Cloud Point temperature of the copolymer. These ratios are subject to experimental limit, depending on the choice of the PEG monoalkylether used and the average degree of polymerization of the propylene oxide units.

The PEG-PPG block copolymer preparation focused on using the PEG, PEG monobutyl ether and monomethyl ether starting materials, as these starting materials are cheap, nontoxic and available in large quantity from a variety of chemical suppliers. Fluka Chemical Corporation sells these PEG materials with average degree of polymerization, x, ranging from about 8 oxoethylene units up through 50 oxoethylene units, or higher.

The degree of polymerization of oxopropylene/oxybutylene units y is readily controlled through the quantity (number of grams) of propylene oxide or butylene oxide added to the PEG monoalkyl ether. Viscosity of the final liquid is influenced by the total chain length (the greater the chain length x + y, the greater the liquid's viscosity), which again are subject to experimental limit both by choice of starting PEG or monoalkyl ether and by quantity of propylene oxide added.

[3. PEG-PPG/PBG Synthesis]

Refer to FIG. 5. The preparation of such copolymers is relatively simple and amenable to industrial scale-up, as evidenced by The Dow Chemical Companies' success in their Tergitol (registered trademark) nonionic surfactant product series.

Refer to FIG. 6. FIG. 6 is a diagram of reactions of the polyglycol monoether with epoxides. The preparation of these similar block copolymers involves the same starting material, that is, PEG monoalkyl ether, the same methodology, and is easy to incorporate into the present embodiment for optimal PEG copolymer materials.

PEG-PPG Synthesis Activities

Propylene oxide (PO) and poly(ethylene glycol) monoalkyl ethers (PEG-MAE) with different molecular weights (approx. 200, 400, 600, 1000, 2000 g/mol) were available from Fluka Chemical (Buchs, Switzerland) - either monomethyl ether (MW 550, 1100, 2000 g/mol) or monobutyl ether (MW 330, 580, 1300, 2200 g/mol) and served as the starting PEG monoalkyl ether.

Solvents (toluene, dioxane, and cyclohexane) were available from Sigma-Aldrich and used as received. Sodium hydride (NaH) initiator (60% dispersion in mineral oil) is available from Sigma-Aldrich. PEG-MAE should be dried by azeotropic distillation with toluene prior to use for best results. PO is refluxed over calcium hydride prior to use (Fluka Chemical).

The polymerization of PO was performed by anionic ring opening using PEG-MAE and sodium/sodium hydride as initiators. All polymerizations were performed in 200-500 ml (filling volume) serum bottles, oven-dried under vaccum prior to use. PEG-MAE and NaH were added to the vials and subsequently sealed with an aluminum crimp-top and a teflon (registered trademark) septum. After purging the vials with argon for 5 minutes, the calculated volume of PO and solvent were added with a syringe through the septum.

All polymerizations were carried out at temperatures between 130 and 175°C to complete conversion, as indicated by a drop of the internal pressure from initially > 100 psig to zero psig in bulk, which was reached after 20 to 180 minutes depending on the temperature, catalyst concentration, and the length of the PPO block.

In the case of solution polymerization, there was no significant drop of pressure because of the vapor pressure of the solvent. Such solution polymerizations are carried out at 160°C for three to four hours.

After polymerization, the active end of the block was inactivated by adding an equimolar quantity of acetic acid. In the case of the solution polymerizations, the solvent was removed after the polymerization on a rotary evaporator. Isolated yields are near quantitative (approx. 100%) .

The relative amounts of n/x/y for the produced material were experimentally verified through routine solution NMR spectroscopy, available through Cal Poly Pomona's 400 MHz FT-NMR spectrometer. Solution viscosities for each sample will also be determined.

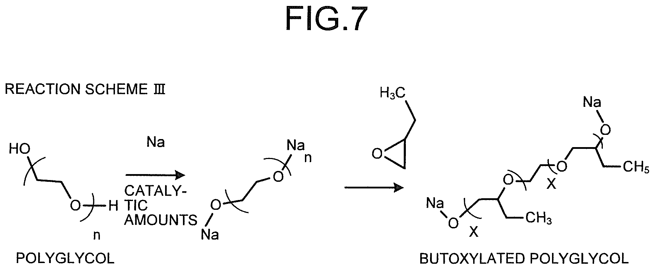

Refer to FIG. 7. FIG. 7 is a diagram of a reaction of a sodium-catalyzed polyglycol with epoxybutane. The sodium oxalate was reprotonated using an acidified silica gel.

A precursor (GE1000) an osmotic pressure of greater than 200 atm was identified. The precursor was derivatized using butylene (B) and propylene (P) groups and the osmotic pressure and the cloud point were determined. The precursor GE1000, glycerol ethoxylate, expressed no coagulation, as expected.

The initial targets were to develop an osmotic pressure of 150 atm or more at a solution concentration of 95%w/w and a cloud point of around 45°C at a solution concentration of 40%w/w.

[4. Prototype Chemical Substances and Structures]

GE1000-BBB is a glycerol ethoxylate of MW 1,000, derivatized with an average of three butoxy groups per OH molecule, for a total of 18 EO molecules and nine butoxy groups per glycerol molecule.

GE1000 = glycerol ethoxylate MW 1,000
GE1000-BBB =glycerol ethoxylate (butoxylated) MW 1,532

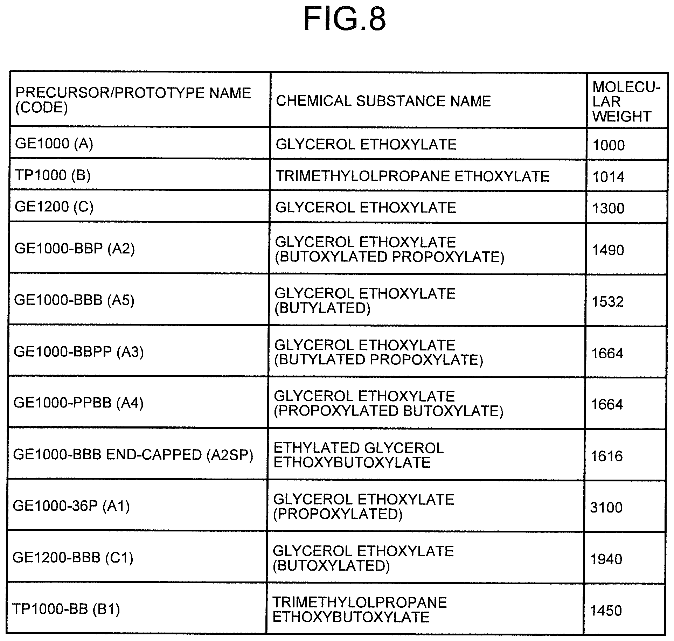

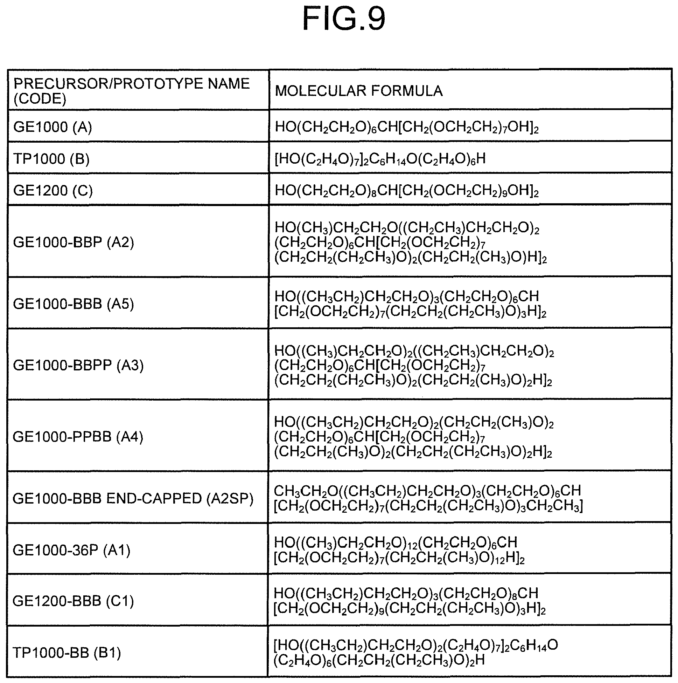

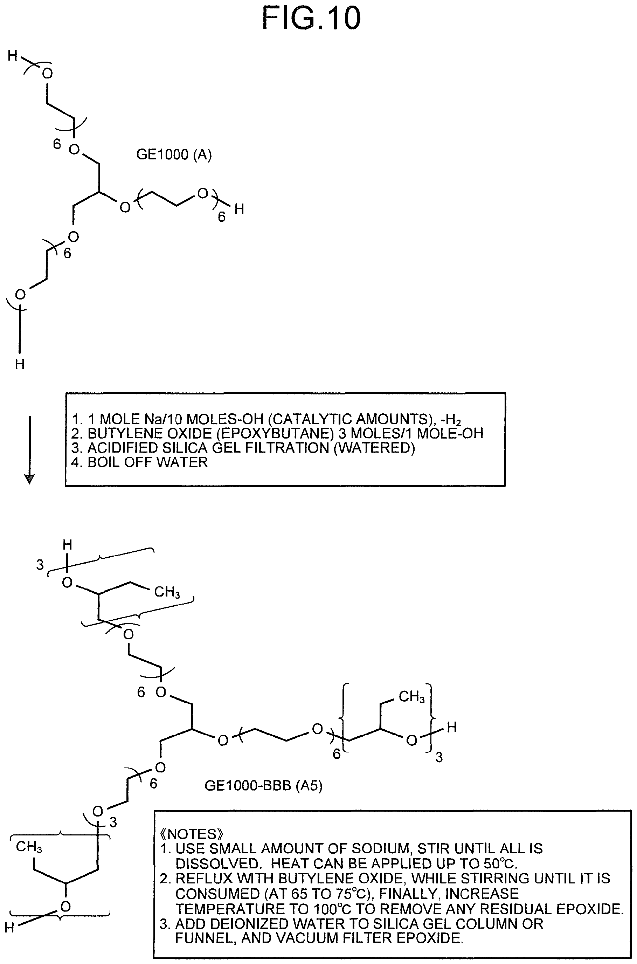

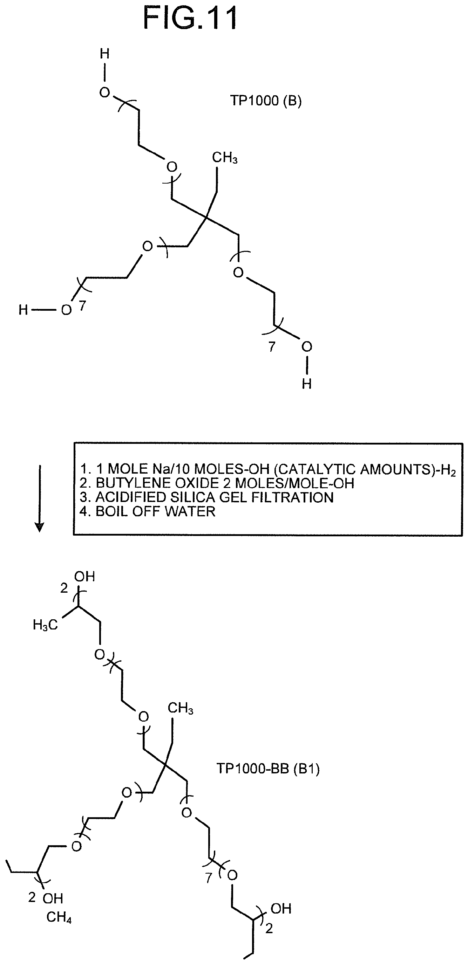

Refer to FIG. 8 to FIG. 13. FIG. 8 is a table of the names and molecular weights of precursors and prototypes. FIG. 9 is a table of the names and molecular formulae of the precursors and prototypes. FIG. 10 is a diagram of a synthesis scheme of GE1000-BBB (A5). FIG. 11 is a diagram of a synthesis scheme of TP1000-BB (B1). The final results and chemical substances, with relevant structures are given below. Further experiments were also conducted for draw solution improvement from osmotic pressure, cloud point, and chemical stability perspectives, as follows. Refer to FIG. 8 and FIG. 9 for a list of the prototypes' draw solutes, chemical substance names, molecular formulae, and molecular weights.

The synthesis scheme of GE1000-BBB (A5) illustrated in FIG. 10 is as follows:

1. 1 mole Na/10 moles-OH (catalytic amounts), -$H_2$
2. Butylene oxide (epoxybutane) 3 moles/1 mole-OH
3. Acidified silica gel filtration (watered)
4. Boil off the water

Notes are as follows:

1. Use a small amount of sodium, stir until all is dissolved. Heat can be applied up to 50°C.
2. Reflux with butylene oxide, while stirring until it is consumed (at 65 to 75°C). Finally, increase the temperature to 100°C to remove any residual epoxide.
3. Add deionized water to a silica gel column or funnel, and vacuum filter the epoxide.
4. Boil the water off at 100°C, whereby low vacuum filtration can be done at lower temperature.

The synthesis of TP1000-BB (B1) illustrated in FIG. 11 is as follows:

1. 1 mole Na/10 moles-OH (catalytic amounts)-$H_2$
2. Butylene oxide 2 moles/mole -OH
3. Acidified silica gel filtration
4. Boil off the water

[5. Experiments for Cloud Point and Osmotic Pressure]

The cloud points of various derivatives of GE1000 (A) with varying concentration were determined. A second precursor TP1000 (B), trimethylolpropane, was derivatized, and its cloud point was determined.

GE1000-BBP (A2) with a cloud point of 55°C and GE1000-BBB (A5) with a cloud point of 47°C were synthesized. At the time of measuring the osmotic pressure, they represented very encouraging and promising results. An osmotic pressure measurement test was carried out against a 20% $MgCl_2$ solution across a CTA FO membrane available from HTI Company. The osmotic pressure of the 20% $MgCl_2$ solution is 270 atm.

$MgCl_2$ was used as salt water (feed) to enable reduction of cross-membrane salt transfer, which is common with the use of NaCl. Thus, the CTA FO membrane available from HTI expressed salt permeation of 3 to 5% when using NaCl, but no membrane permeation was detected when using $MgCl_2$. Salt has an influence on the osmotic pressure of a draw solution, and any salt permeation makes the measurement of the osmotic pressure inaccurate.

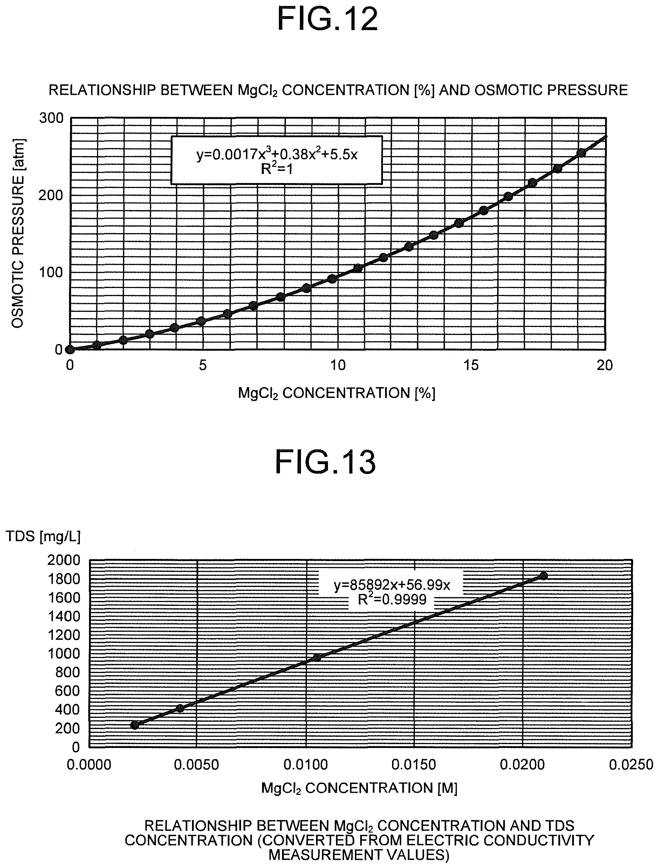

Refer to FIG. 12 and FIG. 13. FIG. 12 is a graph of an osmotic pressure estimated from a chemical potential of magnesium chloride. FIG. 13 is a graph of a relationship between $MgCl_2$ concentration and TDS concentration.

Further Experiments

Synthesis

Synthesis of GE1000-PPBB (A4) and GE1000-BBPP (A3) from the first precursor GE1000 (A) was performed. The synthesis of a second line of derivatives from the new second precursor, TP1000 (B), was also done. In addition, TP1000-BB (B1) was synthesized. Also, from another precursor, GE1200 (C), the derivative, GE1200-BBB (C1), was synthesized.

Cloud Point

The changes in the cloud point with concentration of various aqueous solutions were characterized for derivatives that were synthesized, the primary objective being to determine the cloud point of 40% solutions by the weight of the derivatized glycol.

Osmotic Pressure

Osmotic Pressure was determined against a 20% $MgCl_2$ solution at room temperature, across a CTA membrane available from HTI, in a static U-tube, with the membrane separating the two solutions.

Results

Cloud Point

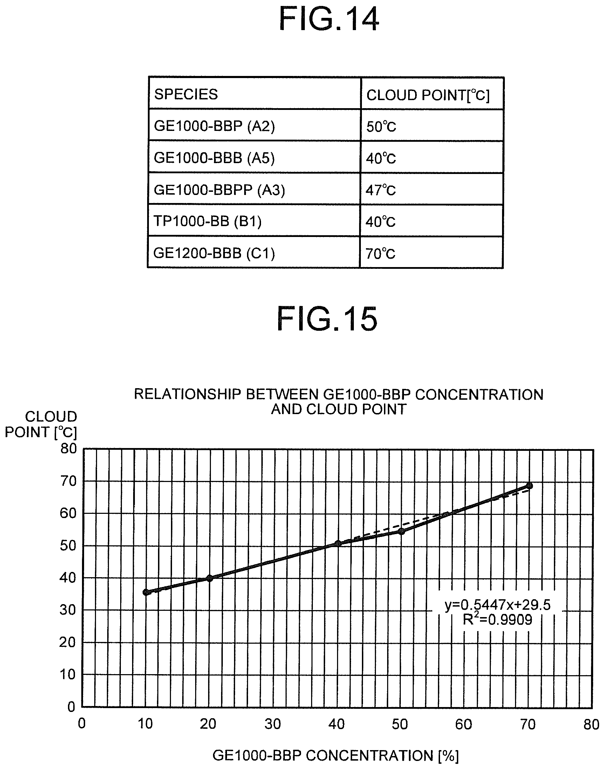

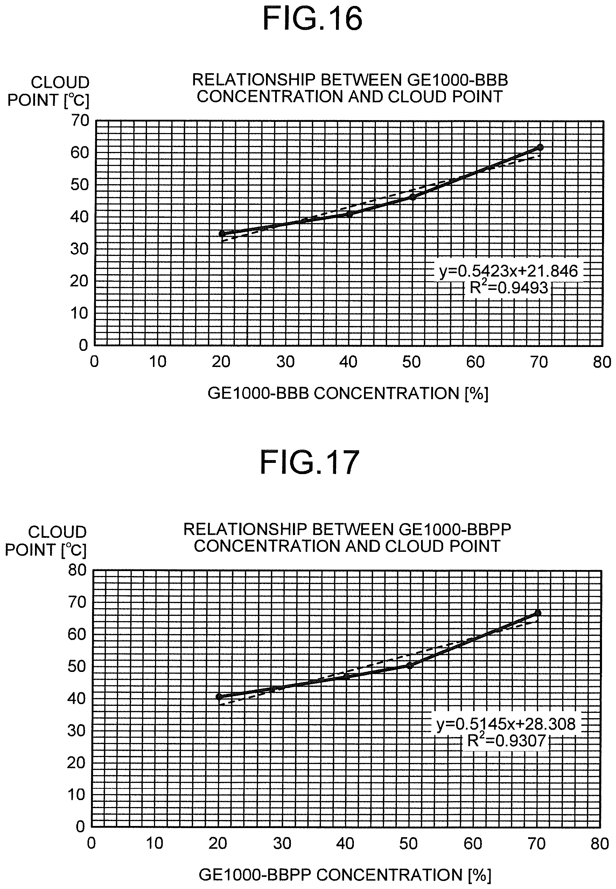

Refer to FIG. 14 to FIG. 17. FIG. 14 is a table of the cloud points of the prototypes. The cloud points are listed in the table in FIG. 14 and their variations with change in concentration are plotted in the graphs in FIG. 15 to FIG. 18. FIG. 15 is a graph of the cloud point of a GE1000-BBP (A2) solution. FIG. 16 is a graph of the cloud point of a GE1000-BBB (A5) solution. FIG. 17 is a graph of the cloud point of a GE1000-BBPP (A3) solution.

Osmotic Pressure

In a period of 72 hours, the 95% solutions of GE1000-BBPP (A3) did not lose or gain volume against 20% $MgCl_2$ aqueous solutions. From this result, each of these solutions has a target osmotic pressure of 270 atm (that is, the osmotic pressure of the 20% $MgCl_2$ aqueous solutions).

Further Experiments

Synthesis

400 mL GE1000-BBB (A5) was synthesized for performance verification tests.

Cloud Point

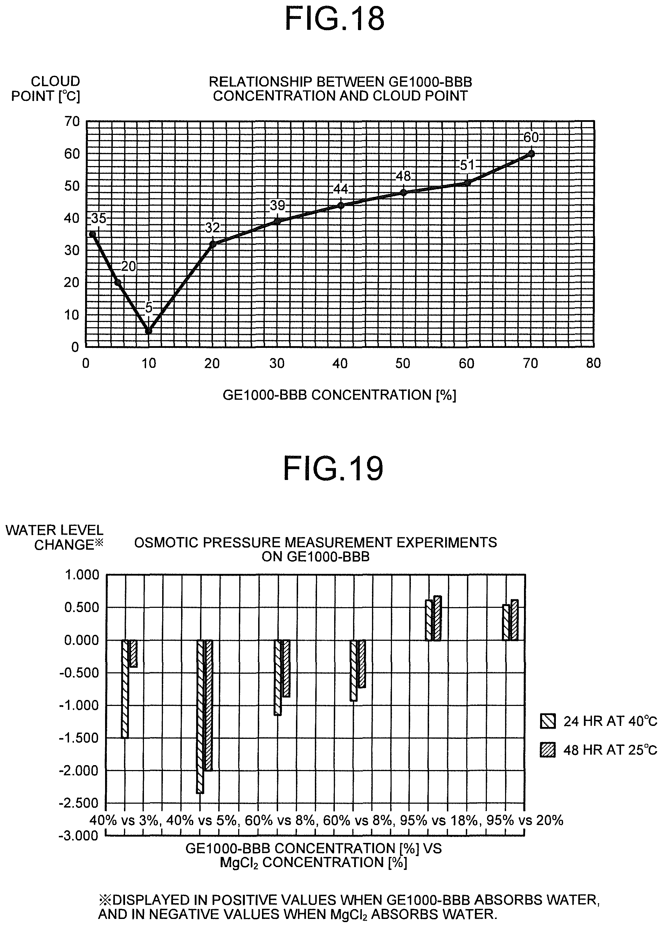

Cloud point measurements for GE1000-BBB (A5) were done for solutions from 1% to 70%. The trend is illustrated in FIG. 18 below. FIG. 18 is a graph of the cloud point of the GE1000-BBB (A5) solution.

Observations

The cloud point curve of GE1000-BBB (A5) represents a curve that is in the form of an inverted U-shaped curve and is normally observed polymers that undergo a thermal phase change.

Osmotic Pressure

An osmotic pressure test was performed for 24 hours by balancing various concentrations of GE1000-BBB (A5) against various concentrations of $MgCl_2$ solutions, separated in a U-tube fixture by a CTA FO membrane available from HTI.
Refer to FIG. 19. FIG. 19 is a graph of the osmotic pressure of GE1000-BBP (A5). The 95%w/w aqueous solution of GE1000-BBB (A5) exhibited an osmotic pressure of greater than 270 atm at 40°C and drew water from both the 20% and 18% $MgCl_2$ solutions.

Discussions

As can be seen from the graphical depiction in FIG. 19 in the osmotic pressure test at room temperature and 40°C, the osmotic pressure of the 95% GE1000-BBB (A5) is higher than the osmotic pressure (270 atm) of the $MgCl_2$ solutions, the osmotic pressure of the 60% GE1000-BBB (A5) is lower than 69 atm, and the osmotic pressure of the 40% GE1000-BBB (A5) is lower than 20 atm.

This set of data needs to be viewed against the cloud point data in FIG. 18, where the cloud points of solutions less than 40% were close to the test temperature of 40°C during the osmotic pressure test, and thus should exhibit low osmotic pressures at these temperatures and concentrations.

This lends credence to the hypothesis that osmotic pressures near cloud point temperatures are vastly lowered due to decreased hydrogen bonding between the ethoxylate groups in the polymer molecules and the ethoxylate groups in the water molecules.

[6. Characteristics of Prototype Chemical Substances]

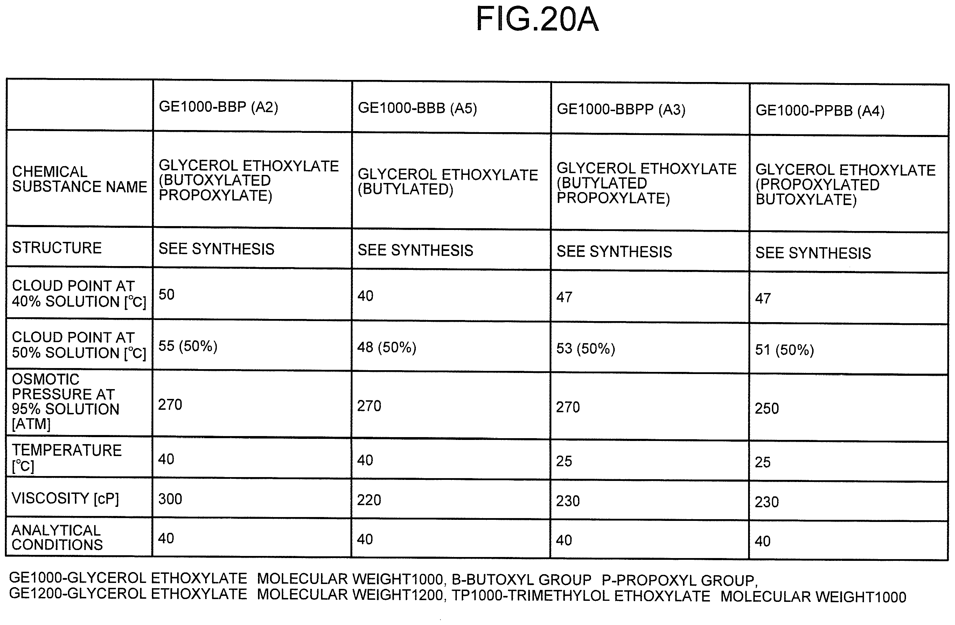

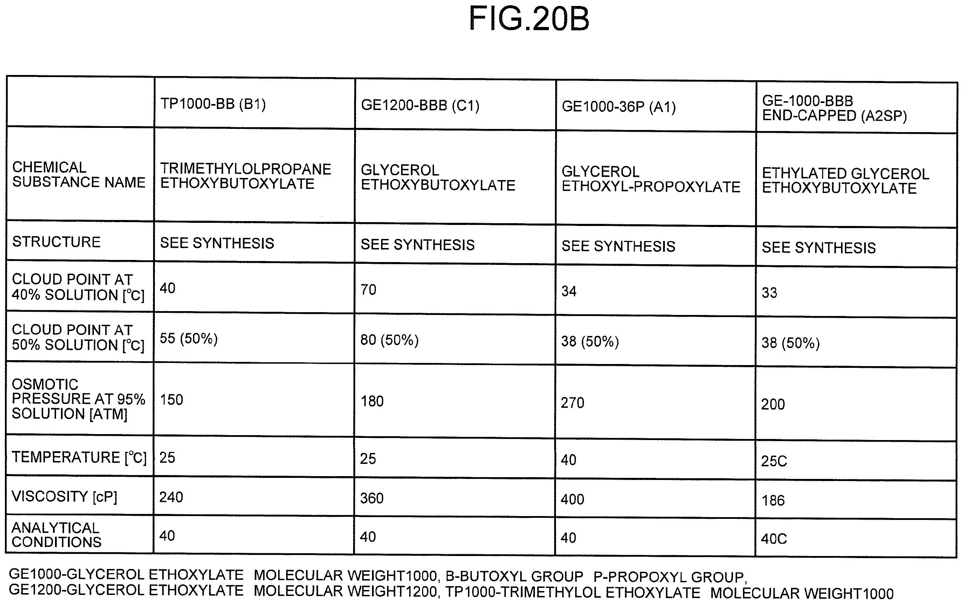

Refer to FIG. 20A and FIG. 20B. FIG. 20A is a table of characteristics of porotype chemical substances. FIG. 20B is a table of a continuation of the table of the characteristics of the prototype chemical substances in FIG. 20A.

[7. Experiments for Recovery Ratio]

A draw solution (an attracting solution) with a concentration in water of 40% was separated from its aqueous solution by heating up to the temperature of the cloud point or higher and gravity separation. A polymer-rich layer was removed by a vacuum syringe, and a water-rich layer was again separated from any dissolved polymer by heating up to the temperature of the cloud point or higher.

The polymer-rich layer was removed by a vacuum syringe and the same operation was repeated for the water-rich layer. Gravity separation techniques were thus repeated 3 times for each initial draw solution. Finally, the water-rich layer was filled in a high-pressure cell (Sterlitch Corporation HP4750, capable of 1,000 psig), with a reverse osmosis flat-sheet membrane (ES-20D, Nitto Denko), and argon/$CO_2$ gas at high pressure (175 and 250 psig) was applied to the cell, to enable pure water to permeate through the membrane, without any draw solution permeation.

Permeates were analyzed by Kars' Advanced Materials Inc., using a Nexus 670 FTIR equipped with a diamond ATR tip, and a search library for comparative analysis. The goal was that no draw solution was permeated through the membrane.

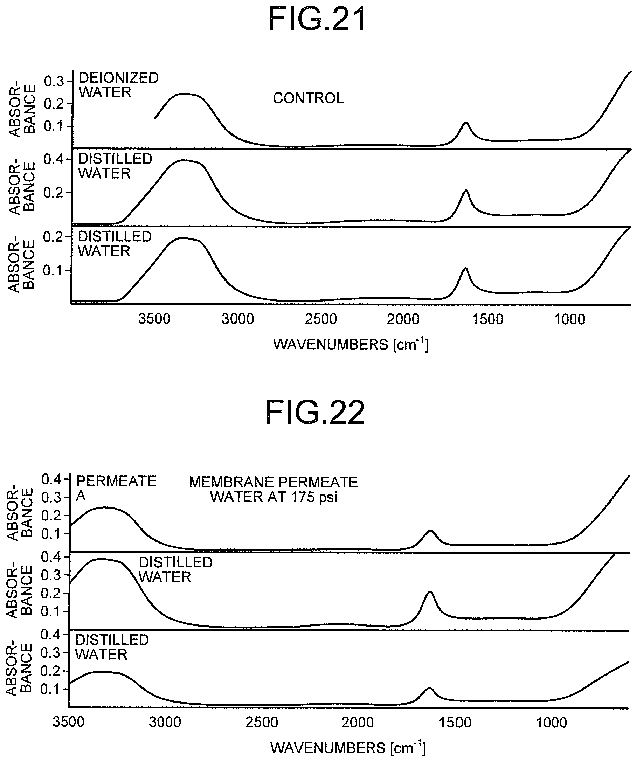

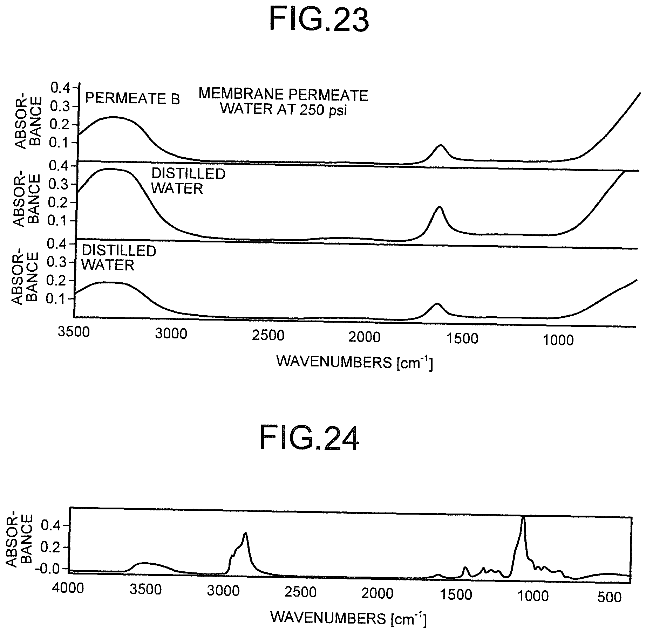

Refer to FIG. 21 to FIG. 24. FIG. 21 is a graph of the absorbance of deionized water as a control in a membrane filtration experiment for an upper layer diluted solution obtained by subjecting a thermo-sensitive water absorbing liquid to heating and gravity separation. FIG. 22 is a graph of the absorbance of permeate water obtained by membrane filtering the upper layer diluted solution obtained by subjecting the thermo-sensitive water absorbing liquid to heating and gravity separation at 175 psi. FIG. 23 is a graph of the absorbance of permeate water obtained by membrane filtering the upper layer diluted solution obtained by subjecting the thermo-sensitive water absorbing liquid to heating and gravity separation at 250 psi. FIG. 24 is a graph of the FT-IR absorbance of GE1000-BBB (A5) as a thermo-sensitive water absorbent. The lower quantification limit of the FTIR is 1 mg/L, and characteristic peaks of the draw solution illustrated in FIG. 24 (such as 1,100 $cm^{-1}$ and 2,900 $cm^{-1}$) were not detected in the permeates. Thus, it was considered that a recovery ratio of 99.999% was ensured.

[8. Experiments for FO membrane permeate flux]

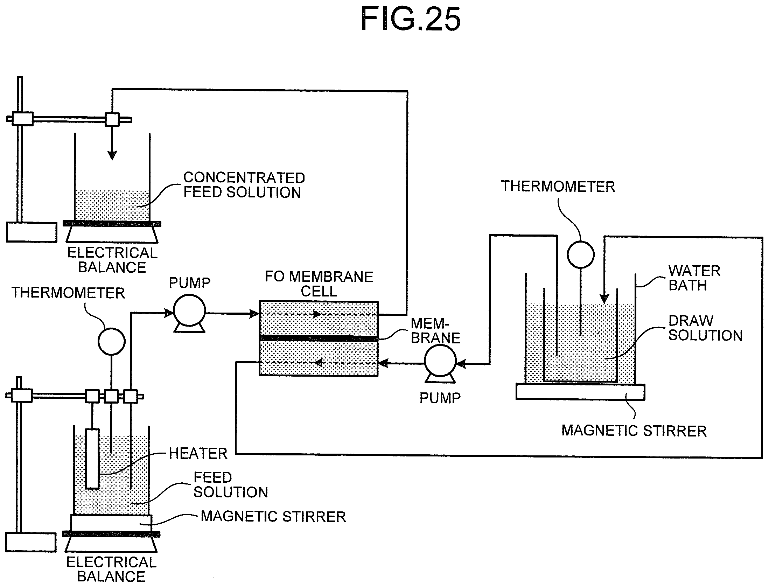

Refer to FIG. 25. FIG. 25 is a schematic diagram of the experimental apparatus for the FO membrane flux measurement. The prototype FO membrane was set in the membrane cell. The effective membrane area was 0.135 $m^2$. GE1000-BBB (A5) 95% solution flowed on the active layer side of the membrane as a draw solution. A sodium chloride 3.5% solution (i.e., water to be treated) counter-currently flowed on the support layer side as a feed solution. The draw and feed solutions were maintained at 40°C by using heaters. The draw and feed solutions were kept homogenous by magnetic stirrers. The weights of the feed and concentrated feed solution were measured every 2 minutes. Permeate water flux was calculated from time variation of these weights.

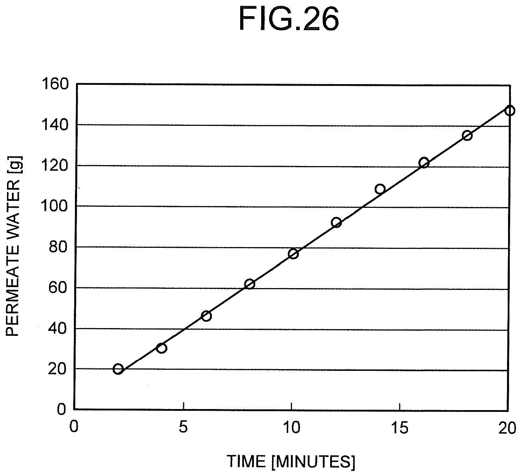

Refer to FIG. 26. FIG. 26 illustrates the integrated weight of permeate water against time. The slope was 7.4 g/minutes. The gravity of permeate water is about 1 kg/L, thus water flux was calculated to be 0.079 m3/m2.day.

Industrial Applicability

The thermo-sensitive water absorbent, the method of water treatment, and the water treatment apparatus according to the present embodiment and present example are widely used in water treatment targeted for the desalination of seawater and for the reuse of sewage, waste water and associated water from gas and oil fields, and industrial waste water for agriculture and industry, for example.

Reference Signs List

1 Water to be treated
2 Membrane concentrated water
3 Semipermeable membrane
4 Water absorbing solution
5 Diluted water absorbing solution
6 Diluted solution
7 Concentrated solution
8 Membrane filtered water
9 Membrane concentrated water
10 Forward osmosis membrane apparatus
11 Gravity separation tank
12 Membrane filtration apparatus
13 Posttreatment apparatus
14 Heater
15 Cooler
16 Heat exchanger

**Claims**

1. A thermo-sensitive water absorbent for a draw material in production of fresh water by a forward osmosis process, the thermo-sensitive water absorbent being a block copolymer having a trimethylolpropane structure as a basic structure, and including ethylene oxide and butylene oxide, wherein
number of the ethylene oxide in the block copolymer is in a range of 10 to 30, and
number of the butylene oxide and number of the propylene oxide are in a range of:

$$0.8 \leq (BO + PO/3.5 + 13)/EO \leq 1.1$$

(where EO represents the number of the ethylene oxide, BO represents the number of the butylene oxide, and PO represents the number of the propylene oxide).

2. A method of water treatment using a thermo-sensitive water absorbent as the draw material in the production of fresh water by the forward osmosis process, the method of water treatment comprising:

contacting water to be treated with a water absorbing solution as an aqueous solution of the thermo-sensitive water absorbent through a semipermeable membrane, transferring water in the water to be treated to the water absorbing solution through the semipermeable membrane, and obtaining a diluted water absorbing solution diluted with the water and membrane concentrated water;
heating the diluted water absorbing solution up to a temperature of the cloud point of the water absorbing solution or higher;
phase separating the diluted water absorbing solution containing the thermo-sensitive water absorbent coagulated at the heating into a concentrated solution containing a coagulated solution of the thermo-sensitive water absorbent and a diluted solution with the water as a main component; and
cooling the concentrated solution separated at the phase separating to a temperature of the cloud point of the water absorbing solution or lower, circulating the concentrated solution to the contacting, and reusing the concentrated solution as the water absorbing solution,
wherein the thermo-sensitive water absorbent has a cloud point, and coagulates when heated, the thermo-sensitive water absorbent being a block copolymer containing at least a hydrophobic part and a hydrophilic part, having a glycerin structure as a basic structure, and including an ethylene oxide group and a group consisting of propylene oxide and/or butylene oxide.

3. A water treatment apparatus (100) using a thermo-sensitive water absorbent as the draw material in the production of fresh water by the forward osmosis process, the water treatment apparatus (100) comprising:

a forward osmosis unit (10) that contacts water (1) to be treated with a water absorbing solution (4) as an aqueous solution of the thermo-sensitive water absorbent through a semipermeable membrane (3), transfers water in the water (1) to be treated to the water absorbing solution (4) through the semipermeable membrane (3), and obtains a diluted water absorbing solution (5) diluted with the water and membrane concentrated water (2);
a heating unit (14) that heats the diluted water absorbing solution (5) up to a temperature of the cloud point of the water absorbing solution or higher;
a separating unit (11) that phase separates the diluted water absorbing solution (5) containing the thermo-sensitive water absorbent coagulated by the heating unit (14) into a concentrated solution (7) containing a coagulated solution of the thermo-sensitive water absorbent and a diluted solution (6) with the water as a main component; and
a cooling unit that cools the concentrated solution (7) separated by the separating unit (11) to a temperature of the cloud point of the water absorbing solution or lower, circulates the concentrated solution (7) to the forward osmosis unit (10), and reuses the concentrated solution (7) as the water absorbing solution (4)
wherein the thermo-sensitive water absorbent has a cloud point, and coagulates when heated, the thermo-sensitive water absorbent being a block copolymer containing at least a hydrophobic part and a hydrophilic part, having a glycerin structure as a basic structure, and including an ethylene oxide group and a group consisting of propylene oxide and/or butylene oxide.

4. Use of a thermo-sensitive water absorbent as a draw material in production of fresh water by a forward osmosis process, wherein the thermo-sensitive water absorbent has a cloud point, and coagulates when heated, the thermo-sensitive water absorbent being a block copolymer containing at least a hydrophobic part and a hydrophilic part, having a glycerin structure as a basic structure, and including an ethylene oxide group and a group consisting of propylene oxide and/or butylene oxide.

5. The use according to claim 4, wherein the hydrophobic part of the block copolymer is the butylene oxide.

6. The use according to claim 4 or 5, wherein a hydrophobic group is added to an end of the block copolymer.

7. The use according to claim 6, wherein the hydrophobic group of the block copolymer is an ethyl group.

8. The use according to any one of claims 4 to 7, wherein
number of the ethylene oxide in the block copolymer is in a range of 10 to 30, and
number of the butylene oxide and number of the propylene oxide are in a range of:

$$0.8 \leq (BO + PO/3.5 + 10)/EO \leq 1.1$$

(where EO represents the number of the ethylene oxide, BO represents the number of the butylene oxide, and PO represents the number of the propylene oxide).

9. Use of a thermo-sensitive water absorbent as a draw material in production of fresh water by a forward osmosis process, the thermo-sensitive water absorbent being a block copolymer having a trimethylolpropane structure as a basic structure, and including ethylene oxide and butylene oxide.

10. The use according to claim 9, wherein
number of the ethylene oxide in the block copolymer is in a range of 10 to 30, and
number of the butylene oxide and number of the propylene oxide are in a range of:

$$0.8 \leq (BO + PO/3.5 + 13)/EO \leq 1.1$$

(where EO represents the number of the ethylene oxide, BO represents the number of the butylene oxide, and PO represents the number of the propylene oxide).

**Patentansprüche**

1. Temperaturempfindliches Wasserabsorptionsmittel für ein Ziehmaterial bei der Herstellung von Frischwasser durch ein Vorwärtsosmoseverfahren, wobei das temperaturempfindliche Wasserabsorptionsmittel ein Blockcopolymer mit einer Trimethylolpropan-Struktur als Grundstruktur ist und Ethylenoxid und Butylenoxid enthält, worin die Anzahl der Ethylenoxide im Blockcopolymer im Bereich von 10 bis 30 liegt und die Anzahl der Butylenoxide und die Anzahl der Propylenoxide in einem Bereich von

$$0,8 \leq (BO + PO/3,5 + 13)/EO \leq 1,1$$

liegen
(wobei EO für die Anzahl der Ethylenoxide steht, BO für die Anzahl der Butylenoxide steht und PO für die Anzahl der Propylenoxide steht).

2. Verfahren zur Wasserbehandlung unter Verwendung eines temperaturempfindlichen Wasserabsorptionsmittels als Ziehmaterial bei der Herstellung von Frischwasser durch das Vorwärtsosmoseverfahren, das Verfahren zur Wasserbehandlung umfassend:

    Inkontaktbringen des zu behandelnden Wassers mit einer wasserabsorbierenden Lösung als wässrige Lösung des temperaturempfindlichen Wasserabsorptionsmittels durch eine semipermeable Membran,
    Überführen des Wassers im zu behandelnden Wasser zur wasserabsorbierenden Lösung durch die semipermeable Membran und
    Erhalten einer verdünnten wasserabsorbierenden Lösung, die mit Wasser und Membran-konzentriertem Wasser verdünnt ist;
    Erwärmen der verdünnten wasserabsorbierenden Lösung auf eine Temperatur des Trübungspunktes der wasserabsorbierenden Lösung oder höher;
    Phasentrennung der verdünnten wasserabsorbierenden Lösung, die das beim Erwärmen koagulierte temperaturempfindliche Wasserabsorptionsmittel enthält, in eine konzentrierte Lösung, die eine koagulierte Lösung des temperaturempfindlichen Wasserabsorptionsmittels enthält, und eine verdünnte Lösung mit dem Wasser als Hauptbestandteil; und
    Abkühlen der konzentrierten Lösung, die bei der Phasentrennung abgetrennt wurde, auf eine Temperatur des Trübungspunktes der wasserabsorbierenden Lösung oder darunter, zirkulieren der konzentrierten Lösung zum Inkontaktbringen und Wiederverwenden der konzentrierten Lösung als wasserabsorbierende Lösung, worin das temperaturempfindliche Wasserabsorptionsmittel einen Trübungspunkt aufweist und beim Erwärmen koaguliert, wobei das temperaturempfindliche Wasserabsorptionsmittel ein Blockcopolymer ist, das mindestens einen hydrophoben Teil und einen hydrophilen Teil enthält, eine Glycerinstruktur als Grundstruktur aufweist und eine Ethylenoxidgruppe und eine Gruppe, bestehend aus Propylenoxid und/oder Butylenoxid, umfasst.

3. Vorrichtung zur Wasserbehandlung (100) unter Verwendung eines temperaturempfindlichen Wasserabsorptionsmittels als Ziehmaterial bei der Herstellung von Frischwasser durch das Vorwärtsosmoseverfahren, wobei die Vorrichtung zur Wasserbehandlung (100) umfasst:

    eine Vorwärtsosmoseeinheit (10), die zu behandelndes Wasser (1) mit einer wasserabsorbierenden Lösung (4) als wässrige Lösung des temperaturempfindlichen Wasserabsorptionsmittels durch eine semipermeable Membran (3) in Kontakt bringt, Wasser im zu behandelnden Wasser (1) zur wasserabsorbierenden Lösung (4) durch die semipermeable Membran (3) überführt und eine verdünnte wasserabsorbierende Lösung (5) erhält, die mit dem Wasser und Membran-konzentriertem Wasser (2) verdünnt ist;
    eine Heizeinheit (14), welche die verdünnte wasserabsorbierende Lösung (5) auf eine Temperatur des Trübungspunkts der wasserabsorbierenden Lösung oder höher erwärmt;

eine Abtrenneinheit (11), welche die verdünnte wasserabsorbierende Lösung (5), die das mittels der Heizeinheit (14) koagulierte temperaturempfindliche Wasserabsorptionsmittel enthält, in eine konzentrierte Lösung (7), die eine koagulierte Lösung des temperaturempfindlichen Wasserabsorptionsmittels enthält, und ein verdünnte Lösung (6) mit dem Wasser als Hauptbestandteil phasentrennt; und

eine Kühleinheit, welche die durch die Abtrenneinheit (11) abgetrennte konzentrierte Lösung (7) auf eine Temperatur des Trübungspunktes der wasserabsorbierenden Lösung oder darunter kühlt, die konzentrierte Lösung (7) zur Vorwärtsosmoseeinheit (10) zirkuliert und die konzentrierte Lösung (7) als wasserabsorbierende Lösung (4) wiederverwendet,

worin das temperaturempfindliche Wasserabsorptionsmittel einen Trübungspunkt aufweist und beim Erwärmen koaguliert, wobei das temperaturempfindliche Wasserabsorptionsmittel ein Blockcopolymer ist, das mindestens einen hydrophoben Teil und einen hydrophilen Teil enthält, eine Glycerinstruktur als Grundstruktur aufweist und eine Ethylenoxidgruppe und eine Gruppe, bestehend aus Propylenoxid und/oder Butylenoxid, umfasst.

4. Verwendung eines temperaturempfindlichen Wasserabsorptionsmittels als Ziehmaterial bei der Herstellung von Frischwasser durch ein Vorwärtsosmoseverfahren, worin das temperaturempfindliche Wasserabsorptionsmittel einen Trübungspunkt aufweist und beim Erwärmen koaguliert, wobei das temperaturempfindliche Wasserabsorptionsmittel ein Blockcopolymer ist, das mindestens einen hydrophoben Teil und einen hydrophilen Teil enthält, eine Glycerinstruktur als Grundstruktur aufweist und eine Ethylenoxidgruppe und eine Gruppe, bestehend aus Propylenoxid und/oder Butylenoxid, umfasst.

5. Verwendung gemäß Anspruch 4, worin der hydrophobe Teil des Blockcopolymers das Butylenoxid ist.

6. Verwendung gemäß Anspruch 4 oder 5, worin eine hydrophobe Gruppe an ein Ende des Blockcopolymers hinzugefügt wird.

7. Verwendung gemäß Anspruch 6, worin die hydrophobe Gruppe des Blockcopolymers eine Ethylgruppe ist.

8. Verwendung gemäß mindestens einem der Ansprüche 4 bis 7, worin
die Anzahl der Ethylenoxide in dem Blockcopolymer in einem Bereich von 10 bis 30 liegt und
die Anzahl der Butylenoxide und die Anzahl der Propylenoxide in einem Bereich von

$$0,8 \leq (BO + PO/3,5 + 10)/EO \leq 1,1$$

liegen
(wobei EO für die Anzahl der Ethylenoxide steht, BO für die Anzahl der Butylenoxide steht und PO für die Anzahl der Propylenoxide steht).

9. Verwendung eines temperaturempfindlichen Wasserabsorptionsmittels als Ziehmaterial bei der Herstellung von Frischwasser durch ein Vorwärtsosmoseverfahren, wobei das temperaturempfindliche Wasserabsorptionsmittel ein Blockcopolymer ist, das eine Trimethylolpropan-Struktur als Grundstruktur aufweist und Ethylenoxid und Butylenoxid umfasst.

10. Verwendung gemäß Anspruch 9, worin
die Anzahl der Ethylenoxide in dem Blockcopolymer in einem Bereich von 10 bis 30 liegt und
die Anzahl der Butylenoxide und die Anzahl der Propylenoxide in einem Bereich von

$$0,8 \leq (BO + PO/3,5 + 13)/EO \leq 1,1$$

liegen
(wobei EO für die Anzahl der Ethylenoxide steht, BO für die Anzahl der Butylenoxide steht und PO für die Anzahl der Propylenoxide steht).

**Revendications**

1. Agent d'absorption d'eau thermosensible servant d'attractif dans la production d'eau douce par un processus d'osmose directe, l'agent d'absorption d'eau thermosensible étant un copolymère séquencé présentant une structure triméthylolpropane comme structure de base, et incluant de l'oxyde d'éthylène et de l'oxyde de butylène, dans lequel un nombre de l'oxyde d'éthylène dans le copolymère séquencé se situe dans une plage de 10 à 30, et un nombre de l'oxyde de butylène et un nombre de l'oxyde de propylène se situent dans une plage de :

$$0,8 \leq (BO + PO/3,5 + 13)/EO \leq 1,1$$

(où EO représente le nombre de l'oxyde d'éthylène, BO représente le nombre de l'oxyde de butylène et PO représente le nombre de l'oxyde de propylène).

2. Procédé de traitement de l'eau utilisant un agent d'absorption d'eau thermosensible comme attractif dans la production d'eau douce par le processus d'osmose directe, le procédé de traitement de l'eau comprenant :

la mise en contact d'eau à traiter avec une solution d'absorption d'eau se présentant comme une solution aqueuse de l'agent d'absorption d'eau thermosensible au travers d'une membrane semi-perméable, le transfert d'eau dans l'eau à traiter vers la solution d'absorption d'eau au travers de la membrane semi-perméable, et l'obtention d'une solution d'absorption d'eau diluée avec l'eau et de l'eau concentrée sur la membrane ;
le chauffage de la solution d'absorption d'eau diluée jusqu'à une température égale au point de trouble de la solution d'absorption d'eau ou supérieure ;
la séparation des phases de la solution d'absorption d'eau diluée contenant l'agent d'absorption d'eau thermosensible coagulé lors du chauffage en une solution concentrée contenant une solution coagulée de l'agent d'absorption d'eau thermosensible et une solution diluée ayant l'eau comme composant principal ; et
le refroidissement de la solution concentrée séparée lors de la séparation des phases jusqu'à une température égale au point de trouble de la solution d'absorption d'eau ou inférieure, la circulation de la solution concentrée vers la mise en contact, et la réutilisation de la solution concentrée comme solution d'absorption d'eau,
dans lequel l'agent d'absorption d'eau thermosensible présente un point de trouble et se coagule lorsqu'il est chauffé, l'agent d'absorption d'eau thermosensible étant un copolymère séquencé contenant au moins une partie hydrophobe et une partie hydrophile, présentant une structure de glycérine comme structure de base, et incluant un groupe oxyde d'éthylène et un groupe constitué d'oxyde de propylène et/ou d'oxyde de butylène.

3. Appareil de traitement de l'eau (100) utilisant un agent d'absorption d'eau thermosensible comme attractif dans la production d'eau douce par le processus d'osmose directe, l'appareil de traitement de l'eau (100) comprenant :

une unité d'osmose directe (10) qui met en contact de l'eau (1) à traiter avec une solution d'absorption d'eau (4) se présentant comme une solution aqueuse de l'agent d'absorption d'eau thermosensible au travers d'une membrane semi-perméable (3), transfère de l'eau dans l'eau (1) à traiter vers la solution d'absorption d'eau (4) au travers de la membrane semi-perméable (3), et obtient une solution diluée d'absorption d'eau (5) diluée avec l'eau et de l'eau concentrée sur la membrane (2) ;
une unité de chauffage (14) qui chauffe la solution d'absorption d'eau diluée (5) jusqu'à une température égale au point de trouble de la solution d'absorption d'eau ou supérieure ;
une unité de séparation (11) qui sépare les phases de la solution d'absorption d'eau diluée (5) contenant l'agent d'absorption d'eau thermosensible coagulé par l'unité de chauffage (14) en une solution concentrée (7) contenant une solution coagulée de l'agent d'absorption d'eau thermosensible et une solution diluée (6) ayant l'eau comme composant principal ; et
une unité de refroidissement qui refroidit la solution concentrée (7) séparée par l'unité de séparation (11) jusqu'à une température égale au point de trouble de la solution d'absorption d'eau ou inférieure, fait circuler la solution concentrée (7) vers l'unité d'osmose directe (10), et réutilise la solution concentrée (7) comme solution d'absorption d'eau (4)
dans lequel l'agent d'absorption d'eau thermosensible présente un point de trouble et se coagule lorsqu'il est chauffé, l'agent d'absorption d'eau thermosensible étant un copolymère séquencé contenant au moins une partie hydrophobe et une partie hydrophile, présentant une structure de glycérine comme structure de base, et incluant un groupe oxyde d'éthylène et un groupe constitué d'oxyde de propylène et/ou d'oxyde de butylène.

**4.** Utilisation d'un agent d'absorption d'eau thermosensible comme attractif dans la production d'eau douce par un processus d'osmose directe, dans laquelle l'agent d'absorption d'eau thermosensible présente un point de trouble et se coagule lorsqu'il est chauffé, l'agent d'absorption d'eau thermosensible étant un copolymère séquencé contenant au moins une partie hydrophobe et une partie hydrophile, présentant une structure de glycérine comme structure de base, et incluant un groupe oxyde d'éthylène et un groupe constitué d'oxyde de propylène et/ou d'oxyde de butylène.

**5.** Utilisation selon la revendication 4, dans laquelle la partie hydrophobe du copolymère séquencé est l'oxyde de butylène.

**6.** Utilisation selon les revendications 4 ou 5, dans laquelle un groupe hydrophobe est ajouté à une extrémité du copolymère séquencé.

**7.** Utilisation selon la revendication 6, dans laquelle le groupe hydrophobe du copolymère séquencé est un groupe éthyle.

**8.** Utilisation selon l'une quelconque des revendications 4 à 7, dans laquelle
un nombre de l'oxyde d'éthylène dans le copolymère séquencé se situe dans une plage de 10 à 30, et
un nombre de l'oxyde de butylène et un nombre de l'oxyde de propylène se situent dans une plage de :

$$0{,}8 \le (BO + PO/3{,}5 + 10)/EO \le 1{,}1$$

(où EO représente le nombre de l'oxyde d'éthylène, BO représente le nombre de l'oxyde de butylène et PO représente le nombre de l'oxyde de propylène).

**9.** Utilisation d'un agent d'absorption d'eau thermosensible comme attractif dans la production d'eau douce par un processus d'osmose directe, l'agent d'absorption d'eau thermosensible étant un copolymère séquencé présentant une structure triméthylolpropane comme structure de base, et incluant de l'oxyde d'éthylène et de l'oxyde de butylène.

**10.** Utilisation selon la revendication 9, dans laquelle
un nombre de l'oxyde d'éthylène dans le copolymère séquencé se situe dans une plage de 10 à 30, et
un nombre de l'oxyde de butylène et un nombre de l'oxyde de propylène se situent dans une plage de :

$$0{,}8 \le (BO + PO/3{,}5 + 13)/EO \le 1{,}1$$

(où EO représente le nombre de l'oxyde d'éthylène, BO représente le nombre de l'oxyde de butylène et PO représente le nombre de l'oxyde de propylène).

# FIG.1

| SALT CONCENTRATION | | [%] | 3 | 4 | 5 | 7 | 10 |
|---|---|---|---|---|---|---|---|
| OSMOTIC PRESSURE OF CONCENTRATED WATER | RECOVERY RATIO 30% | [atm] | 31 | 41 | 51 | 71 | 102 |
| | RECOVERY RATIO 40% | [atm] | 36 | 48 | 60 | 83 | 119 |
| | RECOVERY RATIO 50% | [atm] | 43 | 57 | 71 | 100 | 143 |

# FIG.2

| | LINEAR POLYMER 1 | LINEAR POLYMER 2 | LINEAR POLYMER 3 |
|---|---|---|---|
| CHEMICAL SUBSTANCE NAME | | | |
| STRUCTURE | $E_3 - P_{17} - E_3$ | $E_8 - P_{17} - E_7$ | $E_9 - P_{21} - E_9$ |
| EO NUMBER | 6 | 15 | 18 |
| BO NUMBER | 0 | 0 | 0 |
| PO NUMBER | 17 | 17 | 21 |
| MOLECULAR WEIGHT | 1248 | 1662 | 2001 |
| CLOUD POINT AT 40% SOLUTION [°C] | 21 | 73 | 85 |
| CLOUD POINT AT 50% SOLUTION [°C] | 31 | 78 | NO SEPARATION |
| OSMOTIC PRESSURE AT 95% SOLUTION [atm] | 110 | 178 | 194 |
| TEMPERATURE [°C] | 25 | 40 | 40 |
| VISCOSITY AT 40°C [cP] | 97 | 144 | 212 |

# FIG.3

# FIG.4A

| | GE1000-36P (A1) | GE1000-BBP (A2) | GE1000-BBPP (A3) | GE1000-PPBB (A4) |
|---|---|---|---|---|
| CHEMICAL SUBSTANCE NAME | GLYCEROL ETHOXYL-PROPOXYLATE | GLYCEROL ETHOXYLATE (BUTOXYLATED PROPOXYLATE) | GLYCEROL ETHOXYLATE (BUTYLATED PROPOXYLATE) | GLYCEROL ETHOXYLATE (PROPOXYLATED BUTOXYLATE) |
| STRUCTURE | $\begin{array}{c} \rule[0.5ex]{1em}{0.4pt}E_6 \rule[0.5ex]{1em}{0.4pt} P_{12} \\ G \rule[0.5ex]{1em}{0.4pt} E_7 \rule[0.5ex]{1em}{0.4pt} P_{12} \\ \rule[0.5ex]{1em}{0.4pt} E_7 \rule[0.5ex]{1em}{0.4pt} P_{12} \end{array}$ | $\begin{array}{c} \rule[0.5ex]{1em}{0.4pt}E_6 \rule[0.5ex]{1em}{0.4pt} B_2 \rule[0.5ex]{1em}{0.4pt} P \\ G \rule[0.5ex]{1em}{0.4pt} E_7 \rule[0.5ex]{1em}{0.4pt} B_2 \rule[0.5ex]{1em}{0.4pt} P \\ \rule[0.5ex]{1em}{0.4pt} E_7 \rule[0.5ex]{1em}{0.4pt} B_2 \rule[0.5ex]{1em}{0.4pt} P \end{array}$ | $\begin{array}{c} \rule[0.5ex]{1em}{0.4pt}E_6 \rule[0.5ex]{1em}{0.4pt} B_2 \rule[0.5ex]{1em}{0.4pt} P_2 \\ G \rule[0.5ex]{1em}{0.4pt} E_7 \rule[0.5ex]{1em}{0.4pt} B_2 \rule[0.5ex]{1em}{0.4pt} P_2 \\ \rule[0.5ex]{1em}{0.4pt} E_7 \rule[0.5ex]{1em}{0.4pt} B_2 \rule[0.5ex]{1em}{0.4pt} P_2 \end{array}$ | $\begin{array}{c} \rule[0.5ex]{1em}{0.4pt}E_6 \rule[0.5ex]{1em}{0.4pt} P_2 \rule[0.5ex]{1em}{0.4pt} B_2 \\ G \rule[0.5ex]{1em}{0.4pt} E_7 \rule[0.5ex]{1em}{0.4pt} P_2 \rule[0.5ex]{1em}{0.4pt} B_2 \\ \rule[0.5ex]{1em}{0.4pt} E_7 \rule[0.5ex]{1em}{0.4pt} P_2 \rule[0.5ex]{1em}{0.4pt} B_2 \end{array}$ |
| EO NUMBER | 20 | 20 | 20 | 20 |
| BO NUMBER | 0 | 6 | 6 | 6 |
| PO NUMBER | 36 | 3 | 6 | 6 |
| MOLECULAR WEIGHT | 3100 | 1490 | 1664 | 1664 |
| CLOUD POINT AT 40% SOLUTION [°C] | 34 | 50 | 47 | 47 |
| CLOUD POINT AT 50% SOLUTION [°C] | 38 | 55 | 53 | 51 |
| OSMOTIC PRESSURE AT 95% SOLUTION [atm] | 270 | 270 | 270 | 250 |
| VISCOSITY AT 40°C, 95% SOLUTION [cP] | 400 | 300 | 230 | 230 |

G:GLYCERIN STRUCTURE ($C_3H_5$), TP:TRIMETHYLOLPROPANE STRUCTURE ($C_6H_{14}O$)
E:ETHYLENE OXIDE ($C_2H_5O$), P:PROPYLENE OXIDE ($C_3H_7O$), B:BUTYLENE OXIDE ($C_4H_9O$), R:ETHYL GROUP ($C_2H_5$)

EP 3 130 398 B1

# FIG.4B

| | GE1000-BBB (A5) | GE-1000-BBB END-CAPPED (A2SP) | GE1200-BBB (C1) | TP1000-BB (B1) |
|---|---|---|---|---|
| CHEMICAL SUBSTANCE NAME | GLYCEROL ETHOXYLATE (BUTYLATED) | ETHYLATED GLYCEROL ETHOXYBUTOXYLATE | GLYCEROL ETHOXYBUTOXYLATE | TRIMETHYLOLPROPANE ETHOXYBUTOXYLATE |
| STRUCTURE | $\begin{array}{l} \rule{0pt}{0pt}\ E_6 - B_3 \\ G - E_7 - B_3 \\ \rule{0pt}{0pt}\ E_7 - B_3 \end{array}$ | $\begin{array}{l} E_6 - B_3 - E \\ G - E_7 - B_3 - R \\ E_7 - B_3 - R \end{array}$ | $\begin{array}{l} E_8 - B_3 \\ G - E_9 - B_3 \\ E_9 - B_3 \end{array}$ | $\begin{array}{l} E_6 - B_2 \\ TP - E_7 - B_2 \\ E_7 - B_2 \end{array}$ |
| EO NUMBER | 20 | 20 | 26 | 20 |
| BO NUMBER | 9 | 9 | 9 | 6 |
| PO NUMBER | 0 | 0 | 0 | 0 |
| MOLECULAR WEIGHT | 1532 | 1616 | 1940 | 1450 |
| CLOUD POINT AT 40% SOLUTION [°C] | 40 | 33 | 70 | 40 |
| CLOUD POINT AT 50% SOLUTION [°C] | 48 | 38 | 80 | 55 |
| OSMOTIC PRESSURE AT 95% SOLUTION [atm] | 270 | 200 | 180 | 150 |
| VISCOSITY AT 40°C, 95% SOLUTION [cP] | 220 | 186 | 360 | 240 |

G:GLYCERIN STRUCTURE ($C_3H_5$), TP:TRIMETHYLOLPROPANE STRUCTURE ($C_6H_{14}O$)
E:ETHYLENE OXIDE ($C_2H_5O$), P:PROPYLENE OXIDE ($C_3H_7O$), B:BUTYLENE OXIDE ($C_4H_9O$), R:ETHYL GROUP ($C_2H_5$)

EP 3 130 398 B1

# FIG.5

REACTION SCHEME I

$$CH_3(CH_2)_n(OCH_3CH_2)_xOH \xrightarrow[\substack{y \text{ UNITS}}]{\substack{\text{NaH} \\ \text{INITIATOR}}} CH_3(CH_2)_n(OCH_2CH_2)_x[OCH_2CH(CH_3)]_yOH$$

PEG MONOALKYL ETHER

PEG-PPG BLOCK

# FIG.6

REACTION SCHEME II

$$CH_3(CH_2)_n(OCH_3CH_2)_xOH \xrightarrow[\substack{y \text{ UNITS}}]{\substack{\text{NaH} \\ \text{INITIATOR}}} CH_3(CH_2)_n(OCH_2CH_2)_x[OCH_2CH(CH_2CH_3)]_yOH$$

PEG MONOALKYL ETHER

PEG-PBG BLOCK (LESS POLAR)

$$CH_3(CH_2)_n(OCH_3CH_2)_xOH \xrightarrow[\substack{y \text{ UNITS}}]{\substack{\text{NaH} \\ \text{INITIATOR}}} CH_3(CH_2)_n(OCH_2CH_2)_x[OCH_2CH(CH_2CH_2CH_2CH_3)]_yOH$$

PEG MONOALKYL ETHER

PEG-PHG BLOCK (LEAST POLAR)

# FIG.7

REACTION SCHEME Ⅲ

POLYGLYCOL

BUTOXYLATED POLYGLYCOL

# FIG.8

| PRECURSOR/PROTOTYPE NAME (CODE) | CHEMICAL SUBSTANCE NAME | MOLECU-LAR WEIGHT |
|---|---|---|
| GE1000 (A) | GLYCEROL ETHOXYLATE | 1000 |
| TP1000 (B) | TRIMETHYLOLPROPANE ETHOXYLATE | 1014 |
| GE1200 (C) | GLYCEROL ETHOXYLATE | 1300 |
| GE1000-BBP (A2) | GLYCEROL ETHOXYLATE (BUTOXYLATED PROPOXYLATE) | 1490 |
| GE1000-BBB (A5) | GLYCEROL ETHOXYLATE (BUTYLATED) | 1532 |
| GE1000-BBPP (A3) | GLYCEROL ETHOXYLATE (BUTYLATED PROPOXYLATE) | 1664 |
| GE1000-PPBB (A4) | GLYCEROL ETHOXYLATE (PROPOXYLATED BUTOXYLATE) | 1664 |
| GE1000-BBB END-CAPPED (A2SP) | ETHYLATED GLYCEROL ETHOXYBUTOXYLATE | 1616 |
| GE1000-36P (A1) | GLYCEROL ETHOXYLATE (PROPOXYLATED) | 3100 |
| GE1200-BBB (C1) | GLYCEROL ETHOXYLATE (BUTOXYLATED) | 1940 |
| TP1000-BB (B1) | TRIMETHYLOLPROPANE ETHOXYBUTOXYLATE | 1450 |

# FIG.9

| PRECURSOR/PROTOTYPE NAME (CODE) | MOLECULAR FORMULA |
|---|---|
| GE1000 (A) | $HO(CH_2CH_2O)_6CH[CH_2(OCH_2CH_2)_7OH]_2$ |
| TP1000 (B) | $[HO(C_2H_4O)_7]_2C_6H_{14}O(C_2H_4O)_6H$ |
| GE1200 (C) | $HO(CH_2CH_2O)_8CH[CH_2(OCH_2CH_2)_9OH]_2$ |
| GE1000-BBP (A2) | $HO(CH_3)CH_2CH_2O((CH_2CH_3)CH_2CH_2O)_2$ $(CH_2CH_2O)_6CH[CH_2(OCH_2CH_2)_7$ $(CH_2CH_2(CH_2CH_3)O)_2(CH_2CH_2(CH_3)O)H]_2$ |
| GE1000-BBB (A5) | $HO((CH_3CH_2)CH_2CH_2O)_3(CH_2CH_2O)_6CH$ $[CH_2(OCH_2CH_2)_7(CH_2CH_2(CH_2CH_3)O)_3H]_2$ |
| GE1000-BBPP (A3) | $HO((CH_3)CH_2CH_2O)_2((CH_2CH_3)CH_2CH_2O)_2$ $(CH_2CH_2O)_6CH[CH_2(OCH_2CH_2)_7$ $(CH_2CH_2(CH_2CH_3)O)_2(CH_2CH_2(CH_3)O)_2H]_2$ |
| GE1000-PPBB (A4) | $HO((CH_3CH_2)CH_2CH_2O)_2(CH_2CH_2(CH_3)O)_2$ $(CH_2CH_2O)_6CH[CH_2(OCH_2CH_2)_7$ $(CH_2CH_2(CH_3)O)_2(CH_2CH_2(CH_2CH_3)O)_2H]_2$ |
| GE1000-BBB END-CAPPED (A2SP) | $CH_3CH_2O((CH_3CH_2)CH_2CH_2O)_3(CH_2CH_2O)_6CH$ $[CH_2(OCH_2CH_2)_7(CH_2CH_2(CH_2CH_3)O)_3CH_2CH_3]$ |
| GE1000-36P (A1) | $HO((CH_3)CH_2CH_2O)_{12}(CH_2CH_2O)_6CH$ $[CH_2(OCH_2CH_2)_7(CH_2CH_2(CH_3)O)_{12}H]_2$ |
| GE1200-BBB (C1) | $HO((CH_3CH_2)CH_2CH_2O)_3(CH_2CH_2O)_8CH$ $[CH_2(OCH_2CH_2)_9(CH_2CH_2(CH_2CH_3)O)_3H]_2$ |
| TP1000-BB (B1) | $[HO((CH_3CH_2)CH_2CH_2O)_2(C_2H_4O)_7]_2C_6H_{14}O$ $(C_2H_4O)_6(CH_2CH_2(CH_2CH_3)O)_2H$ |

# FIG.10

GE1000 (A)

1. 1 MOLE Na/10 MOLES-OH (CATALYTIC AMOUNTS), -H₂
2. BUTYLENE OXIDE (EPOXYBUTANE) 3 MOLES/1 MOLE-OH
3. ACIDIFIED SILICA GEL FILTRATION (WATERED)
4. BOIL OFF WATER

GE1000-BBB (A5)

《NOTES》
1. USE SMALL AMOUNT OF SODIUM, STIR UNTIL ALL IS
   DISSOLVED. HEAT CAN BE APPLIED UP TO 50°C.
2. REFLUX WITH BUTYLENE OXIDE, WHILE STIRRING UNTIL IT IS
   CONSUMED (AT 65 TO 75°C), FINALLY, INCREASE
   TEMPERATURE TO 100°C TO REMOVE ANY RESIDUAL EPOXIDE.
3. ADD DEIONIZED WATER TO SILICA GEL COLUMN OR
   FUNNEL, AND VACUUM FILTER EPOXIDE.

# FIG.11

TP1000 (B)

1. 1 MOLE Na/10 MOLES-OH (CATALYTIC AMOUNTS)-H₂
2. BUTYLENE OXIDE 2 MOLES/MOLE-OH
3. ACIDIFIED SILICA GEL FILTRATION
4. BOIL OFF WATER

TP1000-BB (B1)

# FIG.12

RELATIONSHIP BETWEEN $MgCl_2$ CONCENTRATION [%] AND OSMOTIC PRESSURE

$$y=0.0017x^3+0.38x^2+5.5x$$
$$R^2=1$$

(OSMOTIC PRESSURE [atm] vs. $MgCl_2$ CONCENTRATION [%])

# FIG.13

TDS [mg/L]

$$y=85892x+56.99x$$
$$R^2=0.9999$$

$MgCl_2$ CONCENTRATION [M]

RELATIONSHIP BETWEEN $MgCl_2$ CONCENTRATION AND TDS
CONCENTRATION (CONVERTED FROM ELECTRIC CONDUCTIVITY
MEASUREMENT VALUES)

# FIG.14

| SPECIES | CLOUD POINT[°C] |
|---|---|
| GE1000-BBP (A2) | 50°C |
| GE1000-BBB (A5) | 40°C |
| GE1000-BBPP (A3) | 47°C |
| TP1000-BB (B1) | 40°C |
| GE1200-BBB (C1) | 70°C |

# FIG.15

RELATIONSHIP BETWEEN GE1000-BBP CONCENTRATION AND CLOUD POINT

CLOUD POINT [°C]

$y=0.5447x+29.5$
$R^2=0.9909$

GE1000-BBP CONCENTRATION [%]

# FIG.16

CLOUD POINT [°C]

RELATIONSHIP BETWEEN GE1000-BBB CONCENTRATION AND CLOUD POINT

$y = 0.5423x + 21.846$
$R^2 = 0.9493$

GE1000-BBB CONCENTRATION [%]

# FIG.17

CLOUD POINT [°C]

RELATIONSHIP BETWEEN GE1000-BBPP CONCENTRATION AND CLOUD POINT

$y = 0.5145x + 28.308$
$R^2 = 0.9307$

GE1000-BBPP CONCENTRATION [%]

# FIG.18

CLOUD POINT [°C]

RELATIONSHIP BETWEEN GE1000-BBB CONCENTRATION AND CLOUD POINT

GE1000-BBB CONCENTRATION [%]

# FIG.19

WATER LEVEL CHANGE※

OSMOTIC PRESSURE MEASUREMENT EXPERIMENTS ON GE1000-BBB

☒ 24 HR AT 40°C

▨ 48 HR AT 25°C

40% vs 3%, 40% vs 5%, 60% vs 8%, 60% vs 8%, 95% vs 18%, 95% vs 20%

GE1000-BBB CONCENTRATION [%] VS MgCl₂ CONCENTRATION [%]

※DISPLAYED IN POSITIVE VALUES WHEN GE1000-BBB ABSORBS WATER, AND IN NEGATIVE VALUES WHEN MgCl₂ ABSORBS WATER.

# FIG.20A

| | GE1000-BBP (A2) | GE1000-BBB (A5) | GE1000-BBPP (A3) | GE1000-PPBB (A4) |
|---|---|---|---|---|
| CHEMICAL SUBSTANCE NAME | GLYCEROL ETHOXYLATE (BUTOXYLATED PROPOXYLATE) | GLYCEROL ETHOXYLATE (BUTYLATED) | GLYCEROL ETHOXYLATE (BUTYLATED PROPOXYLATE) | GLYCEROL ETHOXYLATE (PROPOXYLATED BUTOXYLATE) |
| STRUCTURE | SEE SYNTHESIS | SEE SYNTHESIS | SEE SYNTHESIS | SEE SYNTHESIS |
| CLOUD POINT AT 40% SOLUTION [°C] | 50 | 40 | 47 | 47 |
| CLOUD POINT AT 50% SOLUTION [°C] | 55 (50%) | 48 (50%) | 53 (50%) | 51 (50%) |
| OSMOTIC PRESSURE AT 95% SOLUTION [ATM] | 270 | 270 | 270 | 250 |
| TEMPERATURE [°C] | 40 | 40 | 25 | 25 |
| VISCOSITY [cP] | 300 | 220 | 230 | 230 |
| ANALYTICAL CONDITIONS | 40 | 40 | 40 | 40 |

GE1000-GLYCEROL ETHOXYLATE  MOLECULAR WEIGHT1000, B-BUTOXYL GROUP  P-PROPOXYL GROUP,
GE1200-GLYCEROL ETHOXYLATE  MOLECULAR WEIGHT1200, TP1000-TRIMETHYLOL ETHOXYLATE  MOLECULAR WEIGHT1000

EP 3 130 398 B1

# FIG.20B

| | TP1000-BB (B1) | GE1200-BBB (C1) | GE1000-36P (A1) | GE-1000-BBB END-CAPPED (A2SP) |
|---|---|---|---|---|
| CHEMICAL SUBSTANCE NAME | TRIMETHYLOLPROPANE ETHOXYBUTOXYLATE | GLYCEROL ETHOXYBUTOXYLATE | GLYCEROL ETHOXYL-PROPOXYLATE | ETHYLATED GLYCEROL ETHOXYBUTOXYLATE |
| STRUCTURE | SEE SYNTHESIS | SEE SYNTHESIS | SEE SYNTHESIS | SEE SYNTHESIS |
| CLOUD POINT AT 40% SOLUTION [°C] | 40 | 70 | 34 | 33 |
| CLOUD POINT AT 50% SOLUTION [°C] | 55 (50%) | 80 (50%) | 38 (50%) | 38 (50%) |
| OSMOTIC PRESSURE AT 95% SOLUTION [ATM] | 150 | 180 | 270 | 200 |
| TEMPERATURE [°C] | 25 | 25 | 40 | 25C |
| VISCOSITY [cP] | 240 | 360 | 400 | 186 |
| ANALYTICAL CONDITIONS | 40 | 40 | 40 | 40C |

GE1000-GLYCEROL ETHOXYLATE MOLECULAR WEIGHT1000, B-BUTOXYL GROUP P-PROPOXYL GROUP,
GE1200-GLYCEROL ETHOXYLATE MOLECULAR WEIGHT1200, TP1000-TRIMETHYLOL ETHOXYLATE MOLECULAR WEIGHT1000

EP 3 130 398 B1

# FIG.21

# FIG.22

# FIG.23

# FIG.24

# FIG.25

EP 3 130 398 B1

# FIG.26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011083663 A
- US 20100155329 A1
- JP 2015054292 A
- JP 2015054293 A
- WO 2012148864 A